# EUROPEAN PATENT SPECIFICATION

(11) **EP 1 365 569 B1**
(45) Date of publication and mention of the grant of the patent: **02.01.2008**
(21) Application number: 03011448.2
(22) Date of filing: 20.05.2003
(51) Int. Cl.: H04N 1/00, H04N 101/00

(54) **Advice device, print-out, and recording medium in which is stored a program**
Ratschlaggebende Vorrichtung, Ausdruck und Speichermedium mit Programm
Dispositif de conseil, impression, et support de stockage stockant un logiciel

(30) Priority: 21.05.2002 JP 2002145732; 01.08.2002 JP 2002224492
(43) Date of publication of application: 26.11.2003
(73) Proprietor: FUJIFILM Corporation, Minato-ku Tokyo (JP)
(72) Inventor: Iida, Takayuki c/o Fuji Photo Film Co. Ltd., Ashigarakami-gun Kanagawa (JP)
(74) Representative: Klunker . Schmitt-Nilson . Hirsch

(56) References cited:
- US-A- 5 119 126
- US-B1- 6 301 440
- PATENT ABSTRACTS OF JAPAN vol. 2002, no. 08, 5 August 2002 (2002-08-05) & JP 2002 107797 A (OLYMPUS OPTICAL CO LTD), 10 April 2002 (2002-04-10)
- PATENT ABSTRACTS OF JAPAN vol. 2000, no. 14, 5 March 2001 (2001-03-05) & JP 2000 333045 A (FUJI PHOTO FILM CO LTD), 30 November 2000 (2000-11-30)
- PATENT ABSTRACTS OF JAPAN vol. 1998, no. 14, 31 December 1998 (1998-12-31) & JP 10 243274 A (SANYO ELECTRIC CO LTD), 11 September 1998 (1998-09-11)
- PATENT ABSTRACTS OF JAPAN vol. 2000, no. 16, 8 May 2001 (2001-05-08) & JP 2001 016469 A (MINOLTA CO LTD), 19 January 2001 (2001-01-19)
- PATENT ABSTRACTS OF JAPAN vol. 1999, no. 08, 30 June 1999 (1999-06-30) & JP 11 088672 A (FUJI PHOTO FILM CO LTD), 30 March 1999 (1999-03-30) & US 2003/193598 A1 (TAKEMURA KAZUHIKO) 16 October 2003 (2003-10-16)

## Description

### BACKGROUND OF THE INVENTION

### Field of the Invention

The present invention relates to an advice device, and a recording medium in which is stored a program. In particular, the present invention relates to an advice device for giving advice to a customer shooting an image, a print-out that is added to photographic prints when photographic prints that have been created in accordance with a request from the customer are delivered to the customer via an order receiving center, which is called DPE (Developing, Printing and Enlarging) shop or a photo shop, and a storage medium in which is stored a program for allowing a computer to function as the advice device.

### Description of the Related Art

Digital still cameras (abbreviated as "DSC" below) of a configuration in which a subject is shot with an imaging device such as a CCD, an analog image signal obtained by the shooting is converted to digital image data, and thereafter the image data is stored in an information storage medium such as SmartMedia® are characterized in that, by playing back and displaying the shot image on a liquid crystal screen (LCD) at the place where the image was shot, a user can check to see whether the shooting was successful or a failure at the place where the image was shot. Such DSCs have rapidly become widespread in recent years. An image shot with a DSC can be preserved as a high-definition photographic print by, for example, a customer bringing the image data to an order receiving center and requesting photographic processing such as the creation of photographic prints. It is also possible for the image represented by the image data to be easily recorded on paper or the like by a printer that the customer owns.

A technique has been proposed in which a communication device of service center and the user's communication device are connected via public communication line, and the information relating to the shot image is transmitted from the customer to the service center. In service center, an expert photographer analyzes the transmitted information, judges the shot image and transmits advice to the customer (for example, see Japanese Patent Application Laid-Open (JP-A) No. 2002-107797).

Requests to create photographic prints from images shot using a DSC or an ordinary camera are ordinarily carried out by the customer bringing to an order receiving center the shot photographic film or the recording medium in which the shot image data is stored. Photographic prints created on the basis of a request from the customer using the shot photographic film or the shot image data read from the recording medium are delivered to the customer returning to the order receiving center.

Conventionally, various technology has been developed for improving the image quality of photographic prints. For example, in digital printers (photographic prints created by a system in which an image is exposed and recorded on printing paper by scanning the printing paper with laser light modulated according to the data of the image to be recorded), which can relatively freely control image quality, various image processing for improving the image quality of photographic prints is provided (e.g., hyper-tone processing that corrects a backlit scene by compressing the gray scale of the low-frequency luminance component of the image).

However, various factors affect the image quality (reproducibility of the shot subject) of photographic prints, and image quality is largely affected depending on, for example, whether or not the shooting operation of the customer during shooting is appropriate.

In particular, recent DSCs have become more sophisticated and more multifunctional, and operations for mastering the functions with which a DSC is disposed have become complex. For this reason, among customers who own a DSC, there are not a few who either do not fully understand the functions with which the DSC that they own is disposed or do not fully understand the operations for utilizing each of the functions with which the DSC is disposed. Additionally, there is an extremely large number of customers who feel dissatisfied with the result (e.g., image quality) of images that they themselves have shot.

For example, the shooting modes currently disposed in many DSCs are configured to eliminate the cumbersomeness of the customer having to change the fine settings (e.g., shutter speed, aperture, etc.) of the DSC in accordance with a scene that is to be shot, so that a shot image of high quality measuring up to the capabilities of the DSC is obtained by the intuitive operation of selecting the shooting mode in accordance with the scene that is to be shot. However, because the number of types of shooting modes tends to increase in accompaniment with the increasing sophistication and multifunctionality of DSCs, the current situation is one where some customers have come to feel that the operations for selecting appropriate shooting modes in accordance with the scene to be shot are in themselves complex.

Currently, in order for customers who have purchased a DSC to understand the functions of the purchased DSC and become acquainted with its shooting operations, there are no other options but to read the operations manual enclosed with the purchased DSC and try out the various operations. Because the volume of such operations manuals also tends to increase in accompaniment with the increasing sophistication and multifunctionality of DSCs, the costumer segment whose level of understanding with respect to the functions of the DSCs and whose level of acquaintance with the shooting operations are insufficient is also increasing. Thus, other than relying on the self-help efforts of customers, such as reading operations manuals, there is a need for the establishment of customer services associated with improving the customer's level of understanding with respect to the functions of the DSCs and the customer's level of acquaintance with shooting operations.

Also, because it is difficult to finely check the image quality of a shot image with an LCD whose screen size is small and which is disposed in the DSC, it is often the case that customers whose level of understanding with respect to DSC functions and whose level of acquaintance with shooting operations are insufficient first feel dissatisfied with the result (e.g., image quality) when they receive and visually check the created photographic prints or visually check the images recorded on paper or the like.

It is extremely difficult to completely prevent the customer requesting the creation of photographic prints from being dissatisfied with the image quality of the finished photographic prints. Additionally, the delivery of photographic prints is simply done in a short period of time when the customer returns to the order receiving center in order to pick up the photographic prints, and the current situation is one where the customer is not asked whether he/she is dissatisfied with the image quality of the photographic prints and information useful to individual customers is not provided.

For this reason, even if, for example, the customer himself/herself carried out shooting operations that adversely affected the image quality of the photographic prints, it is difficult for the customer to become aware of this. Thus, there has been the problem that the customer is frequently dissatisfied with the image quality because the same shooting operations are repeated. There has also been the problem that, even when there is the potential for the dissatisfaction of the customer in regard to the image quality of photographic prints to be eliminated by ordering specific image processing at the time the creation of photographic prints is requested, there is no opportunity for the customer to become aware of this.

In particular, photographic prints are created by an image forming system disposed at a processing station (a so-called large lab) or by an image forming system disposed at an order receiving center, by the customer taking the trouble of going to an order receiving center and ordering only images of the shot images that the customer wishes to preserve as high-definition photographic prints. Thus, the standards demanded by the customer with respect to the result of the photographic prints are high, and there is the potential for dissatisfaction in regard to the results of the photographic prints to be associated with a drop in the level of trust of the customer with respect to DSCs, order receiving centers, and image forming systems, such that, for example, customers who feel dissatisfaction in regard to the result of the photographic prints also feel distrust for DSCs, order receiving centers and image forming systems. For this reason, there is a need for the establishment of customer services associated with the improvement of the image quality of photographic prints and, consequently, the improvement of the level of satisfaction of the customer.

The problem that there are customers whose level of understanding with respect to the functions of shooting devices and whose level of acquaintance with shooting operations are insufficient is not limited to cases where the shooting device is a DSC (specifically, a DSC designed exclusively for shooting). This problem is also common to cases where, for example, the shooting device is an ordinary camera, a digital video camera, or a DSC disposed in a portable device such as a mobile telephone or a PDA. With respect to these customer segments also, there is a need for the establishment of customer services associated with the improvement of the level of understanding with respect to functions and the level of acquaintance with shooting operations.

Although the invention disclosed in the above described JP-A No. 2002-107797 has an advantage that objective evaluation of the image shot by the customer is provided to the customer, the invention is not associated with improvements of the customer's level of understanding with respect to the functions of the DSCs and the customer's level of acquaintance with shooting operations.

US-B-6 301 440 discloses a system for assisting a user to set an optimum parameter for photographing. The assistance action is performed at the time of photographing. This "expert photographer system" may work fully automatically or in a so called "guided mode".

### SUMMARY OF THE INVENTION

The present invention was devised in consideration of the above-described facts, and it is an object thereof to obtain an advice device, and a recording medium in which is stored a program that can realize the improvement of services with respect to a customer who conducts a shooting operation and requests the creation of image outputted media such as photographic prints.

In order to achieve the aforementioned object, according to one aspect of the invention, there is provided an advice device comprising the features of claims 1, 11, 13 and 20.

A person who conducts a shooting operation and a person who requests the creation of image outputted medium (photographic print or the like) can be the same person or different person, and both are collectively referred to as

"customer".

The shooting operation of the customer during shooting that has the potential to affect the image quality of the shot image is identified on the basis of the data of the shot image shot by the customer. In the present invention, examples of a shooting device used by the customer for the shooting include a shooting device of a configuration in which an analog image signal obtained by a subject being shot with an imaging device is converted to digital image data and stored in an information storage medium (a DSC designed exclusively for shooting). However, the shooting device may also be an ordinary camera in which a subject is exposed and recorded on a photosensitive material such as silver photographic film, a digital video camera, or a DSC disposed in a portable device such as a mobile telephone or a PDA.

Specific examples of the shooting operations of the customer during shooting that have the potential to affect the image quality of the shot image include a selection operation of a shooting mode disposed in the shooting device, a selection operation of firing or not firing a flash, and a selection operation of a flash mode. Forgetting to set or forgetting to restore the shooting mode, the firing or non-firing of the flash, or the flash mode are also included in the shooting operations of the customer during shooting. The identification section can identify the shooting operation on the basis of the data of the shot image, e.g., at least one of shooting information representing shooting conditions during shooting and image data of the shot image.

The image data of the shot image is generated and recorded at the same time as the shooting if the shooting device used for shooting is a device other than an ordinary camera. However, when the shooting device is an ordinary camera, processing for visualizing the image exposed and recorded by the camera on the photosensitive material is conducted, and thereafter the image data of the shot image is obtained by reading the visualized image with a reading device such as a scanner or the like. When the image data of the shot image is used, the shooting operation can be identified by analyzing the image data of the shot image.

The information representing the shooting conditions is generated and recorded at the same time as the shooting if the shooting device is a digital video camera or a DSC designed exclusively for shooting. For example, in DSCs designed exclusively for shooting, shooting information is recorded together with image data as an EXIF-format image file or an image file of another format. There are also ordinary cameras that generate information representing shooting conditions during shooting and record the information on photographic film (e.g., APS film) or another recording medium (e.g., an internal memory), and the shooting operation can be identified by using this as the shooting information.

In the present invention, the determination section determines whether or not the customer's shooting operation identified by the identification section is appropriate. The determination of whether or not the customer's shooting operation is appropriate can be conducted by, for example, analyzing the image data of the shot image. Specifically, determining whether or not a shooting mode selection operation is appropriate from the customer's shooting operation can be conducted by, for example, analyzing the image data and determining whether or not the main subject of the shot image can be specified, and when the main subject can be specified, comparing the shooting mode identified by the identification section with a shooting mode suited for the subject type of the specified main subject (when the shooting modes do not match, it is determined that the shooting operation is not appropriate).

For example, of the customer's shooting operations, determining whether or not the selection operation of firing or not firing the flash is appropriate can be conducted by, for example, analyzing the image data and determining whether or not the main subject of the shot image can be specified, and when the main subject can be specified, determining whether or not the exposure of the main subject in the shot image is appropriate, the exposure of the main subject is insufficient, the distance between the camera and the main subject during shooting is a distance reachable by the light of the flash, and determining whether or not the selection operation of firing or not firing the flash identified by the identification section is an operation selecting "no flash firing" (when the above determination is affirmative, it is determined that the shooting operation is not appropriate).

For example, of the customer's shooting operations, determining whether or not the selection operation of the flash mode is appropriate can be conducted by, for example, analyzing the image data, determining whether or not the main subject of the shot image can be specified and determining whether or not the main subject is a person, and when it can be determined that the main subject is a person, determining whether or not there is poor color tone such as red eyes or gold eyes in a region corresponding to an eye portion of the person, there is poor color tone such as red eyes or gold eyes in the region corresponding to the eye portion of the person, and determining whether or not the selection operation of the flash mode identified by the identification section is an operation selecting a firing mode other than a firing mode (e.g., red-eye reduction mode) that reduces poor color tone (when the above determination is affirmative, it is determined that the shooting operation is not appropriate).

Also, in the present invention, advice information representing advice relating to a shooting operation (for example, advice information representing advice to the customer relating to a shooting operation for improving the image quality of the shot image) is generated, on the basis of the result of determination by the determination section, by the generation section. Thus, when the customer has selected a shooting mode that is not suited for the subject type of the shooting target and conducted a shooting operation, advice information indicating the customer of (recommending to the customer) a more suitable shooting mode is generated. For example, when the customer has conducted a shooting operation without firing the flash in a situation where firing the flash is preferable, advice information recommending that the customer fire the flash is generated. Alternatively, for example, when poor color tone resulting from the light of the flash has arisen in the eye portion of a person serving as the main subject of the shot image and the customer has conducted a shooting operation without selecting the flash mode that reduces poor color tone, advice information recommending selecting a firing mode that reduces poor color tone is generated.

Because the advice information generated by the generation section is generated on the basis of the result in which it is determined whether or not the shooting operation of the customer during shooting is appropriate, appropriate advice information corresponding to the shooting operations of individual customers is generated and the advice information is provided to the customer, whereby a customer who has conducted a shooting operation can deepen his/her understanding with respect to the functions of the shooting device used for shooting and can become acquainted with the shooting operations on the basis of the provided advice information, without having to read through a voluminous operations manual. In this manner, according to the invention, because the customer's level of understanding with respect to the functions of the shooting device used for shooting and the customer's level of acquaintance with shooting operations can be improved, improvement of services with respect to customers conducting shooting operations can be realized.

Incidentally, although at least the image data of the shot image is included in the data of the shot image pertaining to the invention, when the shooting device used for shooting is a shooting device of the type that generates and records shooting information during shooting as mentioned above, shooting information representing shooting conditions during shooting can also be included in the data of the shot image. When shooting information and image data of the shot image are included in the data of the shot image, it is preferable to configure the invention so that at least one of the identification of the shooting operation by the identification section, the determination by the determination section, and the generation of the advice information by the generation section is conducted on the basis of the shooting information and the image data of the shot image.

Although it is also possible for the identification of the shooting operation by the identification section, the determination by the determination section, and the generation of the advice information by the generation section to be conducted on the basis of the result of analyzing the image data of the shot image, the configuration of at least one of the identification section, the determination section, and the generation section can be simplified by using the shooting information and the image data of the shot image.

When advice information in regard to a selection operation of the shooting mode, which is one type of shooting operation, is to be generated, the invention can be configured so that the identification section identifies, on the basis of the shooting information, a shooting mode used during shooting as the shooting operation of the customer during shooting, the determination section determines whether or not a subject type of the shot image that is determined by analyzing the image data of the shot image is a subject type suited for being shot in the shooting mode identified by the identification section, and the generation section generates, as the advice information, advice information indicating the shooting mode suited for shooting the subject type when it is determined by the determination section that the subject type of the shot image is not the subject type suited for being shot in the identified shooting mode.

Thus, even when an appropriate shooting mode was not selected during shooting with respect to a subject type of the shot image (e.g., when "portrait mode" was selected as the shooting mode despite the fact that the subject type was a landscape), advice information indicating a more suitable shooting mode (e.g., landscape mode) is generated by the generation section. Thus, the customer to whom the generated advice information is presented can become aware of the fact that there is a more suitable shooting mode than the shooting mode selected during shooting and can utilize the more suitable shooting mode for future shooting operations.

When consideration is given to the fact that the functions (e.g., types of shooting modes, types of flash modes, capabilities of the flash) with which shooting devices are disposed differ for each model of shooting device, it is preferable to configure the invention to further include a storage section in which is stored specification information representing specifications of shooting devices having the potential to be used by the customer for shooting, wherein the determination section determines whether or not the shooting operation of the customer is appropriate by identifying, on the basis of the data of the shot image, the model of the shooting device used by the customer for shooting and referencing, on the basis of the identified model, the corresponding specification information stored in the storage section.

Thus, because the determination section can precisely grasp, on the basis of the specification information stored in the storage section, the specification of the shooting device that the customer used for the shooting, the determination section can more precisely identify whether or not the shooting operation of the customer is appropriate. Needless to say, the specification information stored in the storage section can also be used when the generation section generates the advice information.

Because parties related to image outputting processing in which the shot image is outputted by the image forming system in accordance with the customer's request (e.g., processing stations in which an image forming system is disposed, order receiving centers, and manufacturers of shooting equipment such as shooting devices) can record predetermined information in the storage section and reference the information stored in the storage section, it is preferable for the related parties to be able to share the information via the storage section. Image outputting is processing such as exposure-recording image on silver halide photosensitive material, outputting printed image created by image recording with recording liquid (ink) adhesion on the recording material, or writing processed image data on the information recording medium such as CD-R.

Thus, for example, manufacturers of shooting devices can provide specification information representing the specifications of individual shooting devices that they manufacture (store the specification information in the storage section), and information such as the shooting operation of the customer during shooting and conditions of use of the shooting by the customer generated by the order receiving center receiving the request from the customer or the processing station conducting image outputting processing in accordance with the request from the customer and stored in the storage section is obtained, whereby the information becomes useful for the development of future products and the manufacturers can formulate plans for manufacturing and storage of time-change components.

It is also preferable for the shot image to be an image for which the image outputting has been requested by the customer with respect to an image forming system, for the advice device to further include an output section for analyzing the shot image on the basis of the data of the shot image, conducting image processing corresponding to the result of the analysis, and outputting the image, and for the generation section to add, to the generated advice information, notification information notifying the customer of the image processing conducted by the output section (e.g., notification of at least one of the type of image processing, the reason for implementing the image processing, the processing conditions of the image processing, and the reason for determining the processing conditions). Thus, by referencing the notification information added to the provided advice information, a customer, who has been provided with the advice information generated by the generation section, can understand what kind of image processing was conducted at the time the image was outputted. Thus, the trust of the customer with respect to processing stations and the like can be improved.

Sometimes the image quality of outputted images can be improved by conducting specific image processing at the time of the image outputting, even in cases where the finishing of the shot images was not appropriate due to reasons such as the shooting operation of the customer during shooting not being appropriate or the shooting device that the customer used for shooting being a shooting device that did not include functions for obtaining a shot image with an appropriate finish under specific conditions during shooting. However, many times, customers whose knowledge in relation to the image outputting is poor are also unaware of the existence of such image processing.

In consideration of this, when the shot image is an image for which the image outputting has been requested by the customer with respect to a image forming system, it is preferable for the generation section to determine, on the basis of the data of the shot image, a type of image processing that is preferable to order at the time the image outputting is requested, and to add the determined type of image processing to the advice information.

Thus, a customer who has been provided with the advice information generated by the generation section can become aware of the existence of image processing that is preferable to order at the time the image outputting is requested, and order the image processing when reordering the image outputting or when requesting the image outputting of other images. Thus, according to the invention, further improvement of services with respect to customers conducting shooting operations can be realized.

The generation section may be configured to generate a simulated image obtained when the specific image processing is conducted with respect to the shot image (this simulated image may also be smaller than the normal size of the images outputted by the image forming system). By providing the customer with the simulated image, the customer can more effectively be made aware of the existence of image processing that is preferable to order at the time the image outputting is requested.

The shot image is an image for which an image outputting has been requested with respect to an image forming system, and the advice device further includes a display control section which, when there is an inquiry from the customer, via a terminal separate from the image forming system, relating to the advice that the advice information represents, generates a simulated image representing an image to be obtained by conducting a shooting operation corresponding to the advice or by ordering the image processing corresponding to the advice at the time the image outputting is requested again and displays the simulated image on a display of the terminal.

Thus, when a customer who has been provided with the advice information generated by the generation section, wishes to check the difference in the finish of the image obtained when the recommended shooting operation is conducted in relation to the advice that the provided information represents or wishes to check the finish of the image obtained when the image processing that is preferable to order at the time the image outputting is requested is ordered, it becomes possible for the customer to check the difference in the finish by an image being displayed on the display of the terminal if the customer makes an inquiry via the terminal separate from the image forming system. Thus, further improvement of services with respect to customers conducting shooting operations can be realized.

The shot image is an image for which an image outputting has been requested by the customer with respect to an image forming system, and the advice information generated by the generation section is conveyed to the customer when an outputted image in accordance with the customer's request is delivered to the customer.. Thus, the customer can receive the advice information without much hassle.

Although several ways of conveying the advice information are conceivable, such as conveying the advice information by audio or recording the advice information in an information storage medium and giving the information storage medium to the customer, it is preferable for the generation section to print the generated advice information as a finishing memo and for the finishing memo to be added to the outputted image delivered to the customer via the order receiving center. By adding the advice information as a finishing memo, the customer can more easily check the content of the advice that the advice information represents in comparison with recording the advice information in an information storage medium and giving the information storage medium to the customer, and it becomes possible for the customer to repeatedly refer to the content of the advice in comparison with conveying the advice information by audio.

Because the advice information-in which the shooting operation of the customer during shooting is identified, it is determined whether the identified shooting operation of the customer is appropriate, and which is generated on the basis of the result of the determination-representing advice relating to a shooting operation is printed on the print-out pertaining to the invention, the customer's level of understanding with respect to the functions of the shooting device used for shooting and the customer's level or acquaintance with the shooting operations can be improved, and improvement of services with respect to customers conducting shooting operations can be realized.

According to another aspect of the invention, there is provided a storage medium in which is stored a program for implementing processing in a computer, the processing comprising: a first step for identifying, on the basis of data of a shot image shot by a customer, a shooting operation of the customer during shooting; a second step for determining whether or not the customer's shooting operation identified in the first step is appropriate; and a third step for generating, on the basis of a result of the determination in the second step, advice information representing advice relating to a shooting operation.

Because the program stored in the storage medium pertaining to the invention is a program for allowing a computer to function as the advice device, improvement of services with respect to customers conducting shooting operations can be realized by a computer reading and implementing the program.

In the third step, a type of image processing that is preferable to order at the time an image outputting is requested is determined on the basis of data of the shot image, and the determined type of the image processing is added to the advice information. Thus, a customer provided with advice information can become aware of the existence of image processing that is preferable to order at the time the image outputting is requested and can order the image processing when reordering the creation of image outputted medium with respect to the same image or requesting the image outputting with respect to other images, whereby further improvement of services with respect to customers conducting shooting operations can be realized.

According to a still further aspect of the invention, there is provided an advice device comprising: an input section for a customer, who received an image outputted medium created from an image obtained by shooting with a shooting device, to input, when the customer is dissatisfied with the image quality of the image outputted medium, information representing the reason for the dissatisfaction; and a generation section for determining, when the information has been inputted by the customer via the input section, a remedy for eliminating the customer's dissatisfaction that the information represents and generating advice information recommending implementation of the determined remedy to the customer.

The input section for a customer, who has received an image outputted medium created from an image obtained by the shooting with a shooting device, to input, when the customer is dissatisfied with the image quality of the image outputted medium, information representing the reason for the dissatisfaction is disposed in the advice device pertaining to the invention. Examples of the shooting device used by the customer for the shooting include a shooting device of a configuration in which an analog image signal obtained by a subject being shot with an imaging device is converted to digital image data and stored in an information storage medium (a DSC designed exclusively for shooting). However, the shooting device may also be an ordinary camera in which a subject is exposed and recorded on a photosensitive material such as silver photographic film, a digital video camera, or a DSC disposed in a portable device such as a mobile telephone or a PDA.

When the information is inputted by the customer via the input section, a remedy for eliminating the customer's dissatisfaction that the information represents is determined and advice information recommending implementation of the determined remedy to the customer is generated by the generation section. Examples of remedies for eliminating the customer's dissatisfaction specifically include improving the shooting operation of the customer during shooting and the customer ordering predetermined image processing at the time the creation of the image outputted medium is requested. Because the advice information representing such remedies is provided to the customer, a customer who is dissatisfied with the image quality of an image outputted medium can become aware of the remedy for eliminating the dissatisfaction. Thus, improvement of services with respect to customers who have requested the creation of image outputted medium can be realized.

The determination of the remedy (remedy for eliminating the customer's dissatisfaction) by the generation section can be conducted by corresponding and storing, in a storage section, reasons for dissatisfaction that have the potential of being inputted as the information by the customer with remedies for eliminating the dissatisfaction, and determining the remedy on the basis of the information stored in the storage section.

The information in which reasons for dissatisfaction and their remedies are corresponded may be stored in the storage section in a database form, or may be stored in the storage section as an algorithm (program). When there are several type of remedies for eliminating the customer's dissatisfaction and the appropriate remedy differs in accordance with the functions with which the shooting device that the customer used for shooting is disposed, it is preferable to store the several types of remedies and to store selection conditions for each because it is necessary to identify the functions with which the shooting device that the customer used for shooting is disposed and select the appropriate remedy.

Specifically, the generation section can be configured to determine a shooting operation for eliminating the customer's dissatisfaction that the information inputted via the input section represents, and generate advice information recommending implementation of the determined shooting operation to the customer. Thus, because the advice information representing such remedies is provided to the customer, a customer who is dissatisfied with the image quality of an image outputted medium can become aware of the shooting operation for eliminating the dissatisfaction.

When consideration is given to the fact that there are cases where the appropriate remedy differs in accordance with the functions with which the shooting device that the customer used for shooting is disposed, it is preferable for the generation section to identify, on the basis of data of the shot image obtained by the shooting, the functions of the shooting device that the customer used during the shooting and determine a shooting operation for eliminating the dissatisfaction of the customer in accordance with functions of the identified shooting device. Thus, the shooting operation for eliminating the customer's dissatisfaction can be more precisely determined.

Specifically, it is preferable to configure the generation section so that the generation section determines whether or not the customer's dissatisfaction that the information inputted via the input section represents can be eliminated by ordering predetermined image processing at the time creation of the image outputted medium is requested and, when it is determined that the customer's dissatisfaction can be eliminated by ordering the predetermined image processing, generates advice information recommending ordering the predetermined image processing.

In a case where, of the remedies for eliminating the customer's dissatisfaction, a shooting operation will not contribute to improving the image quality of photographic prints created from shot images but the customer's dissatisfaction can be eliminated by ordering predetermined image processing at the time the creation of the image outputted medium is requested, because the advice information recommending ordering the predetermined image processing is generated, the advice information is provided to the customer, whereby a customer who is dissatisfied with the image quality of the image outputted medium can become aware of the existence of the predetermined image processing for eliminating the dissatisfaction. Also, by ordering the predetermined image processing and requesting the recreation of photographic prints with whose image quality the customer is dissatisfied, it becomes possible for the customer to obtain photographic prints in which the image quality is improved.

When it is determined that the customer's dissatisfaction can be eliminated by ordering the predetermined image processing, the generation section generates image data representing an image to be outputted on the image outputted medium obtained by ordering the predetermined image processing and displays the image that the image data represents on a display. Thus, the customer can visually and easily become aware of the degree to which the image quality of the image outputted medium will be improved by ordering the predetermined image processing.

When the predetermined image processing is image processing in which the processing result will differ in accordance with parameter settings, plural images in which the settings of the parameters of the predetermined image processing are mutually different may be respectively displayed. Alternatively, the settings of the parameters of the predetermined image processing may be repeatedly changed and images may be displayed in accordance with instructions inputted by the customer via the input section.

It is preferable for the advice device to be disposed at an order receiving center. Thus, in a case where a customer visiting the order receiving center in order to pick up the created photographic prints checks, at that place, the image outputted medium picked up at the order receiving center and is dissatisfied with the image quality of the image outputted medium, the customer can immediately operate the advice device and be provided with the advice information, whereby the customer can instantly become aware of the remedy for eliminating the dissatisfaction.

According to another aspect of the invention, there is provided a recording medium in which is stored a program for implementing predetermined processing in a computer disposed with an input section for inputting information, the predetermined processing comprising: a first step for determining, when a customer who received an image outputted medium created from an image obtained by shooting with a shooting device, is dissatisfied with the image quality of the image outputted medium, and inputted information representing the reason for the dissatisfaction via the input section, a remedy for eliminating the customer's dissatisfaction that the information represents; and a second step for generating advice information recommending, to the customer, implementation of the remedy determined in the first step.

Because the program stored in the storage medium pertaining to the invention is a program for implementing processing including the first and second steps in a computer (i.e., a program for allowing a computer to function as the advice device), improvement of services with respect to customers who have requested the creation of photographic prints can be realized by a computer reading and implementing the program.

According to yet another aspect of the present invention, there is provided an advice device comprising: an identification section for identifying a shooting operation during shooting, on the basis of data of an image obtained by shooting; an input section for inputting information about the image; an analyzing section for analyzing the information inputted via the input section; a determination section for determining whether or not the shooting operation identified by the identification section is appropriate; and a generation section for generating advice information, on the basis of at least one of a result of analysis by the analyzing section and a result of the determination by the determination section.

The information inputted via the input section is information about at least one of image output, image processing, the shooting operation, and a shooting condition. The information inputted via the input section is also at least one of a request, a problem, dissatisfaction, a query, and an answer. More specifically, the information inputted via the input section is dissatisfaction with image output. The advice information is about at least one of image processing which is applicable to the image and a possible improvement of the shooting operation.

It is possible that the advice device comprises: an identification section for identifying a shooting operation during shooting, on the basis of data of an image obtained by shooting; an input section for inputting information about the image; an analyzing section for analyzing the information inputted via the input section; and a generation section for generating advice information, on the basis of a result of analysis by the analyzing section.

It is also possible that the advice device comprises: an identification section for identifying a shooting operation during shooting, on the basis of data of an image obtained by shooting; an input section for inputting information about the image; a determination section for determining whether or not the shooting operation identified by the identification section is appropriate; and a generation section for generating advice information, on the basis of a result of the determination by the determination section.

### BRIEF DESCRIPTION OF THE DRAWINGS

Fig. 1 is a block diagram showing the schematic configuration of a image forming system pertaining to the embodiment of the invention;
Fig. 2 is a flow chart showing the content of auto setup processing;
Figs. 3 and 4 are a flow chart showing the content of advice memo issuance processing;
Fig. 5A and 5B illustrate an example of an advice memo;
Fig. 6 is a flow chart showing the content of image display processing;
Fig. 7 is a block diagram showing another schematic configuration of the image forming system;
Fig. 8 is a flow chart showing the content of advice providing processing;
Figs. 9A to 9D illustrate examples of screens displayed on a hyperterminal display;

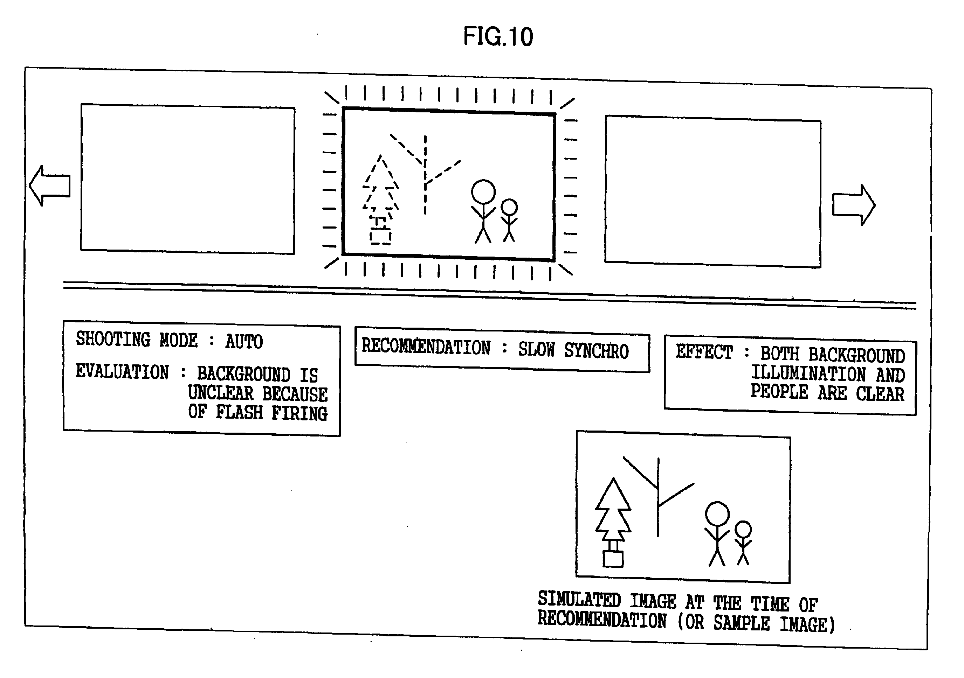

Fig. 10 illustrates an example of a screen disposed on a display when general advice regarding shooting operations is provided;
Fig. 11 illustrates an example of information that is displayable on a computer display at an order receiving center; and
Fig. 12 illustrates another example of information that is displayable on a computer display at an order receiving center.

### DETAILED DESCRIPTION OF THE INVENTION

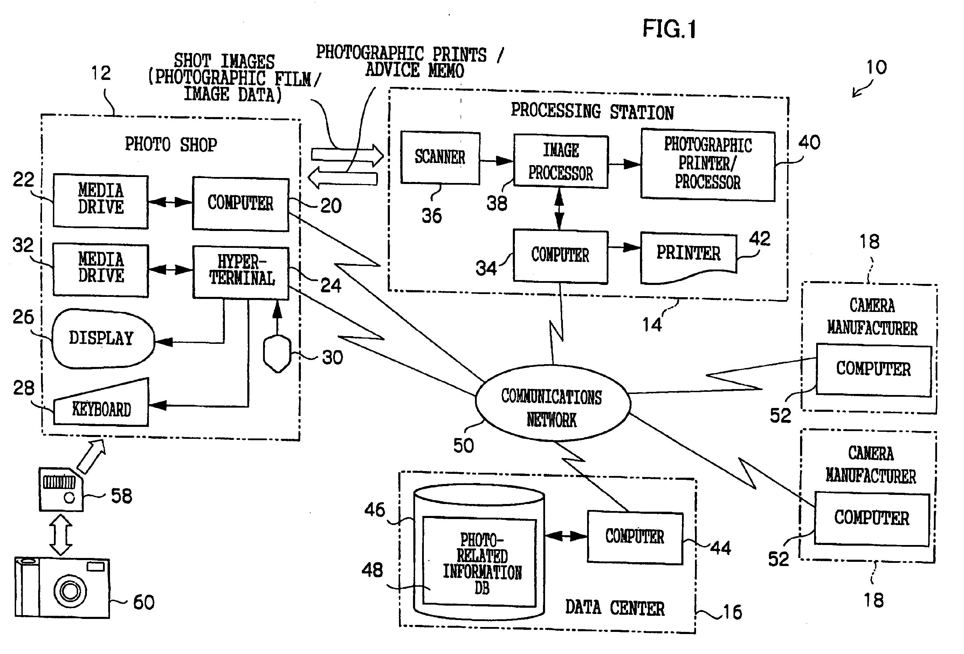

An example of an embodiment of the present invention will be described in detail below with reference to the drawings. In Fig. 1, an image forming system 10 pertaining to the present embodiment is shown. The image forming system 10 pertaining to the present embodiment includes order receiving centers in various locations that receive photographic processing requests from customers, such as requests for creating photographic prints, a processing station 14 that conducts photographic processing requested by a customer via the order receiving centers 12, a data center 16 that collectively manages various information relating to the photographic processing, and plural camera manufacturers 18 that manufacture cameras that customers use.

A computer 20 for shop clerks of the order receiving centers 12 to operate and a hyperterminal for customers visiting the order receiving centers 12 to operate are disposed at each order receiving center 12. A media drive 22 is connected to each computer 20.

In the present embodiment, there are three types of request modes among the photographic processing requests from the customers. The first mode is a mode in which a customer shoots a subject using a digital still camera, a digital video camera, or a digital still camera disposed in a portable device such as a mobile telephone or a PDA (these will be collectively referred to below as DSCs, and a DSC to which the invention is applied is labeled with the reference numeral "60" and shown as one example in Fig. 1), whereby image data is recorded (e.g., recorded as an EXIF-format image file or an image file of another format) in a recording medium 58 (e.g., SmartMedia®, CompactFlash®, Memory Stick®, etc.; in Fig. 1, the appearance of SmartMedia® is shown as one example), and photographic processing is requested by bringing the recording medium 58 to the order receiving center 12.

The media drive 22 includes the function of reading and writing information with respect to various recording media 58. The computer 20, to which the media device 22 is connected, is connected to (a computer 34 described later of) the processing station 14 via a communications network 50. When photographic processing is requested by the first request mode, at the order receiving center 12, the photographic processing request is received by receiving the recording medium 58 brought by the customer, the image data (image file) of the shot images is read by the media drive 22 from the received recording medium 58, and the read image data is sent to the processing station 14 by the computer 20, whereby the processing station 14 is requested to implement the photographic processing for which a request from the customer has been received.

In the second request mode, image data (e.g., an EXIF-format image file or an image file of another format) obtained by the customer shooting a subject using a DSC is sent to the order receiving center 12 via a computer network such as the Internet, whereby photographic processing is requested. The computer 20 includes the function of sending and receiving information via the Internet or the like. When photographic processing is requested by the second request mode, at the order receiving center 12, the photographic processing request is received by the image data of the shot images sent from the customer via the Internet being received by the computer 20, and the received image data is sent by the computer 20 to the processing station 14, whereby the processing station 14 is requested to implement the photographic processing requested by the customer.

In the third request mode, photographic film, on which images have been exposed and recorded by the customer shooting a subject using a camera, is brought to the order receiving center 12, whereby photographic processing is requested. When photographic processing is requested by the third request mode, at the order receiving center 12, the photographic processing request is received by receiving the photographic film brought by the customer, and the received photographic film is sent to the processing station 14, whereby the processing station 14 is requested to implement the photographic processing requested by the customer.

The hyperterminal 24 disposed at the order receiving center 12 comprises a personal computer (PC) and is configured by a CPU, a ROM, a RAM, and input/output ports being mutually connected through a bus (not shown). A hard disk drive (HDD; not shown) that serves as a storage medium, a display 26 for displaying images and the like, a keyboard 28, a mouse 30, and a media drive 32 are each connected to the input/output ports. Similar to the media drive 22, the media drive 32 includes the function of reading and writing information with respect to various recording media 58. The hyperterminal 24 is also connected to the communications network 50. It should be noted that the keyboard 28 and the mouse 30 function as an input section pertaining to the invention.

A computer 34, a scanner 36, an image processor 38, and a photographic printer/processor 40 are disposed at the processing station 14. Although not shown, the computer 34 is configured by a CPU, a ROM, a RAM, and input/output ports being mutually connected through a bus and by various peripheral devices being connected to the input/output ports. Examples of the peripheral devices connected to the input/output ports include a keyboard, a display, a mouse, and a hard disk drive (HDD) that serves as a recording medium. When photographic processing is requested by the first request mode or the second request mode, the computer 34 receives the image data of the shot images sent from the order receiving center 12 and outputs the image data to the image processor 38.

When photographic processing is requested by the third mode, photographic film that is sent from the order receiving center 12, and on which exposed and recorded images are visualized through processing such as development, is set in the scanner 36. The scanner 36 reads the images (images visualized through processing such as development) recorded on the set photographic film and outputs the image data obtained by this reading to the image processor 38.

The image processor 38 conducts predetermined image processing with respect to the image data inputted from the scanner 36 or the computer 34. The photographic printer/processor 40 creates photographic prints (exposes and records images on printing paper by scanning the printing paper with a laser modulated in accordance with the images to be recorded, develops the printing paper on which images have been exposed and recorded, etc.) using the image data that has been image-processed by the image processor 38. It should be noted that the type of image processing conducted by the image processor 38 and processing conditions are determined by the computer 34.

The computer 34 disposed at the processing station 14 is connected to the communications network 50 and can communicate, via the communications network 50, with the hyperterminal 24 of the order receiving center 12 and a computer 44 (described later) of the data center 16. A printer 42 for recording characters and the like on recording media such as paper is connected to the computer 34. An auto setup program for implementing automatic setup processing described later, an advice memo issuance program for implementing advice memo issuance processing described later, and an image display program for implementing image display processing described later are respectively installed (stored in a recording medium such as the HDD) in the computer 34.

The computer 44 and a large-capacity recording device 46 comprising a HDD or the like are disposed in the data center 16. The computer 44 is connected to the communications network 50 and can communicate, via the communications network 50, with the computer 20 disposed at the order receiving center 12 and computers 52 that the camera manufacturers 18 respectively own. A photo-related information database (DB) 48 for recording various information relating to the photographic processing is disposed in the storage device 46. The storage device 46 is connected to the computer 44, and the reading and writing of information with respect to the photo-related information DB 48 is conducted by the computer 44.

With respect to the action of the present embodiment, the photo-related information DB 48 will be described first. In the image forming system 10, individual customers are discriminated/managed by customer numbers. In the order receiving center 12, information such as the request date and the content and quantity of the requested photographic processing is inputted into the computer 20 each time photographic processing is requested by a customer, whereby this information is corresponded with the customer number and stored in the HDD of the computer 20 as customer information. It should be noted that it is preferable for the customer numbers to be recorded in advance in card-like recording media (e.g., a magnetic card, an IC card, etc.) that the customers carry and present at the time they request photographic processing, and for the customer numbers to be obtained by reading the customer numbers from the recording media.

When a request for photographic processing is received from a customer by the first request mode or the second request mode, the shot images are delivered by the customer as an EXIF-format image file or an image file of another format. However, in addition to the image data, an image file of this type of format also includes, for each shot image, information such as a file name, the type of DSC used for the shooting, the shooting date and time, and various information (e.g., shutter speed, aperture, image quality mode (compression rate of the image data), sensitivity, exposure program mode, photometric system, white balance mode, focus mode, sharpness mode, focal distance, exposure correction, whether the flash was on or off, flash correction, whether the micromode was on or off, etc.) representing the shooting conditions (DSC settings) at the time of shooting.

For this reason, when a request for photographic processing is received from a customer by the first request mode or the second request mode, in the order receiving center 12, the information such as the type of DSC used for the shooting is read from the image file delivered by the customer, the information is stored in the HDD of the computer 20 as customer information, and the information such as the type of DSC and the shot image number (number of image files) is sent, together with the customer number, to the computer 44 of the data center 16. Thus, the computer 44 corresponds the information such as the type of DSC and the shot image number (number of image files) with the customer number and stores the information in the photo-related information DB 48 of the storage device 46.

The information such as the type of DSC and the shot image number (number of image files) stored in the photo-related information DB 48 of the storage device 46 is referenced by the camera manufacturers 18. By referencing this information via the computers 52, each camera manufacturer 48 can grasp, for each type of DSC, the number of customers using a DSC manufactured by their particular company, the shooting times (shot image number) and shooting frequency for individual customers, and the information is useful for the development of future DSC products. Each camera manufacturer 48 can also formulate storage periods for time-change components of DSCs and manufacturing plans for time-change components. When there are customers who own DSCs in which the total number of shooting time has not been reached, it also becomes possible to recommend exchanging or replacing DSC components through the order receiving center 12.

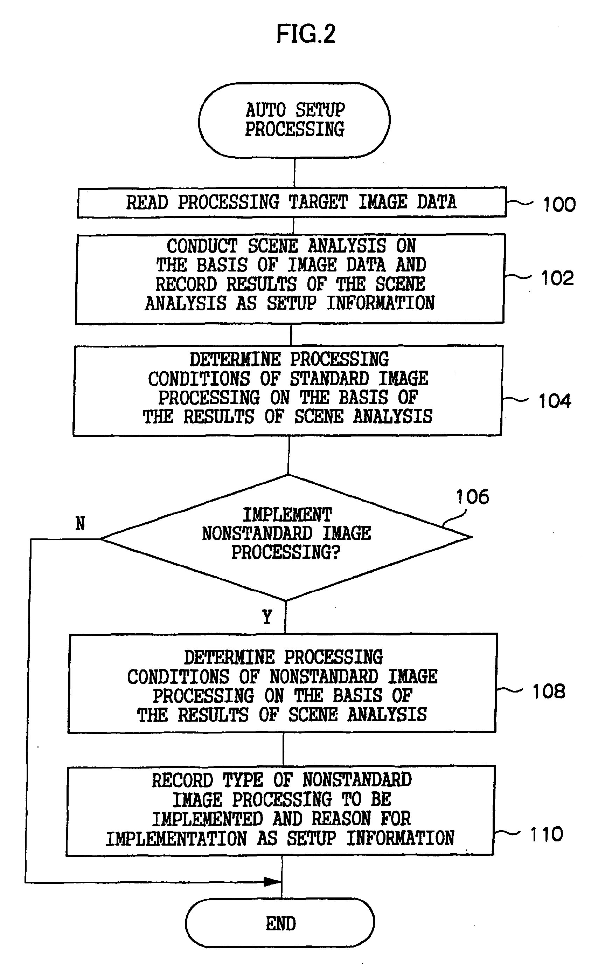

Next, auto setup processing that is implemented by the computer 34 in order to determine the type of image processing that is to be implemented by the image processor 38 and processing conditions when photographic prints are to be created at the processing station 14 in accordance with a request from a customer will be described with reference to the flow chart of Fig. 2. It should be noted that the auto setup processing is processing that is implemented by the CPU of the computer 34 implementing the auto setup program, and is respectively implemented with respect to all of the shot images for which photographic prints are to be created in accordance with the request from the customer. Also, the auto setup processing corresponds to an output section together with the image processor 38 that actually conducts image processing and the photographic printer/processor 40 that creates the photographic prints.

In step 100, processing target image data of the shot image is read to a work area of the RAM. In step 102, the scene (subject) that is photographed as the shot image is analyzed on the basis of the processing target image data read in step 100. In the scene analysis, various processing, such as detection of the color balance and density range of the shot image, and evaluation of color saturation and sharpness, is conducted. In this various processing, face region search processing, which searches for whether or not a face image region corresponding to a human face is present in the shot image on the basis of the image data of the shot image, is included. Depending on the result of this face region search processing (whether or not a face image region is present), the class (subject type) of scene photographed as the shot image can be roughly determined.

When it is detected, by the face region search processing, that a face image region is present in the shot image, detection of the color balance and density range is conducted with respect to the detected face image region, and red-eye detection processing, which extracts an eye portion region corresponding to the eye portion of a person present in the detected face image region and detects whether or not there is poor color tone such as red eyes or gold eyes in the extracted eye portion region, is also conducted. When the scene analysis is completed, the analysis result is written as setup information in the HDD. It should be noted that step 102 constitutes part of a determination section pertaining to the invention.

In step 104, processing conditions for image processing (referred to below as standard image processing), which is to be implemented with respect to all of the images, are determined as setup processing with respect to the processing target shot images on the basis of the results of the scene analysis in step 102. Examples of the standard image processing include density conversion processing for reproducing an image at a proper density on printing paper, color conversion processing for reproducing an image at a proper color balance on printing paper, and pixel density conversion processing that converts a pixel number (pixel density) of the image data.

As a result of the scene analysis, when it is determined that the processing target shot image was underexposed or overexposed, processing conditions for the density conversion processing are determined so that the underexposure or the overexposure is corrected, and when it is determined that the processing target shot image was shot with heterogeneous light sources, processing conditions for the color conversion processing are determined so that deviations in color balance resulting from the heterogeneous light sources are corrected. The processing conditions for the standard image processing determined in this manner are either written in the HDD or outputted to the image processor 38 as setup information. In step 106, on the basis of the results of the scene analysis in step 102, it is determined whether or not image processing that is implemented only with respect to images for which it is predicted that photographic prints of a proper image quality cannot be obtained simply by conducting the standard image processing (referred to below as nonstandard image processing) is to be implemented. Examples of the nonstandard image processing include hyper-tone processing (also called backlit scene correction or high-contrast scene correction), in which a result corresponding to shutting light method (dodging) is obtained by compressing the contrast of ultra-low frequency luminance components of an image, hyper-sharpness processing (also called sharpness correction), which emphasizes the sharpness of an image while controlling graininess, red-eye correction processing, which corrects poor color tone in the eye portion region present in an image, soft focus processing for lowering the sharpness of an image to obtain a portrait-style finish, cross filter processing for shooting using a cross filter to obtain an image that is the same as an image in which the picture tone has been intentionally changed, and RP-style finishing correction processing for obtaining a reversal print finish by raising the color saturation of an image.

For example, on the basis of the scene analysis, when it is detected by the face region search processing that a face image region is present in the shot image, or when it is detected that the face image region is underexposed in comparison to a background region, it is determined that the hyper-tone processing is to be implemented as the nonstandard image processing. Also, on the basis of the scene analysis, when it is determined that the sharpness of the shot image is insufficient, it is determined that the hyper-sharpness processing is to be implemented as the nonstandard image processing. When poor color tone in the eye portion region is detected by the red-eye detection processing of the scene analysis, it is determined that red-eye correction processing is to be implemented as the nonstandard image processing. As a result of the scene analysis, when it is determined that the color saturation of the shot image is insufficient, it is determined that the RP-style finishing correction processing is to be implemented as the nonstandard image processing.

When it is determined that implementation of the nonstandard image processing with respect to the processing target image data is unnecessary, the determination in step 106 is negative, whereby the auto setup processing is concluded without any processing. On the other hand, when it is determined that specific nonstandard image processing is to be implemented with respect to the processing target image data, the determination in step 106 is affirmative and the auto setup processing proceeds to step 108, where processing conditions for the nonstandard image processing that was determined to be implemented are determined on the basis of the results of the scene analysis. In step 110, the type of nonstandard image processing to be implemented and the reason for implementation are either written in the HDD or outputted to the image processor 38 as setup information, and the auto setup processing is concluded.

It should be noted that, in the present embodiment, information representing the results of the scene analysis and the setup information are sent from the computer 34 to the data center 16, corresponded with discrimination information (e.g., customer numbers, order numbers assigned to individual requests from customers, frame numbers assigned to individual shot images, etc.) for specifying individual images, and registered in the photo-related information DB 48. Also, in the present embodiment, image data for recording and the image file of the shot images are also sent from the computer 34 to the data center 16, corresponded with discrimination information for specifying individual images, and registered in the photo-related information DB 48. Thus, the image file of the shot images, the information representing the results of the scene analysis, the setup information, and the image data for recording are respectively stored in the photo-related information DB 48.

Because the auto setup processing is respectively implemented with respect to all shot images for which photographic prints are to be created, the setup information is respectively stored in the HDD with respect to all of the shot images for which photographic prints are to be created. The image processor 38 of the processing station 14 references the setup information corresponding to the individual shot images at the time image processing is implemented with respect to the image data of the individual shot images, and conducts standard image processing in accordance with the processing conditions for the standard image processing set in the setup information. When implementation of specific nonstandard image processing is instructed by the setup information, the image processor 38 conducts the specific nonstandard image processing in accordance with the processing conditions for the specific nonstandard image processing set in the setup information.

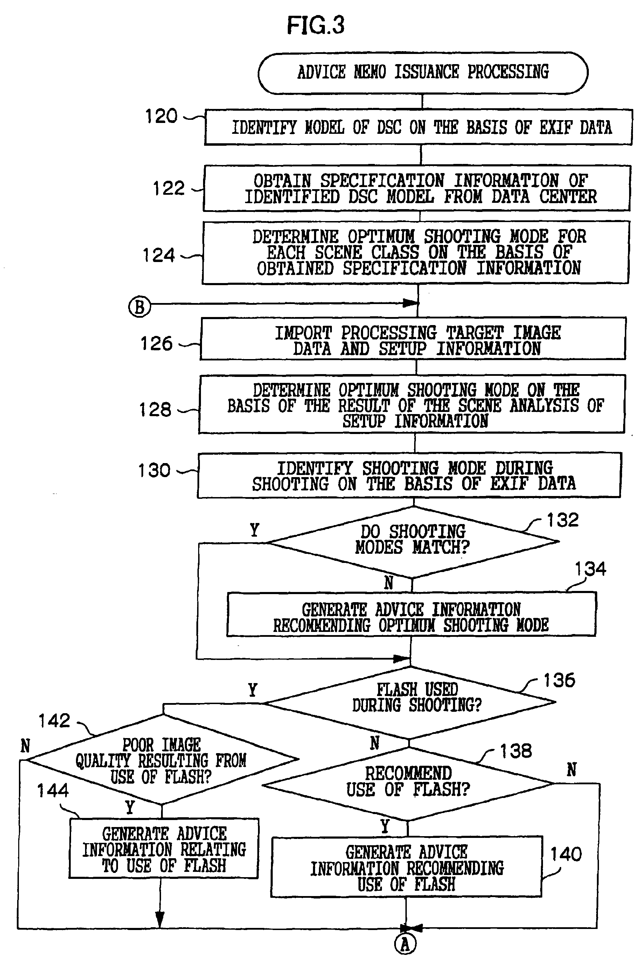

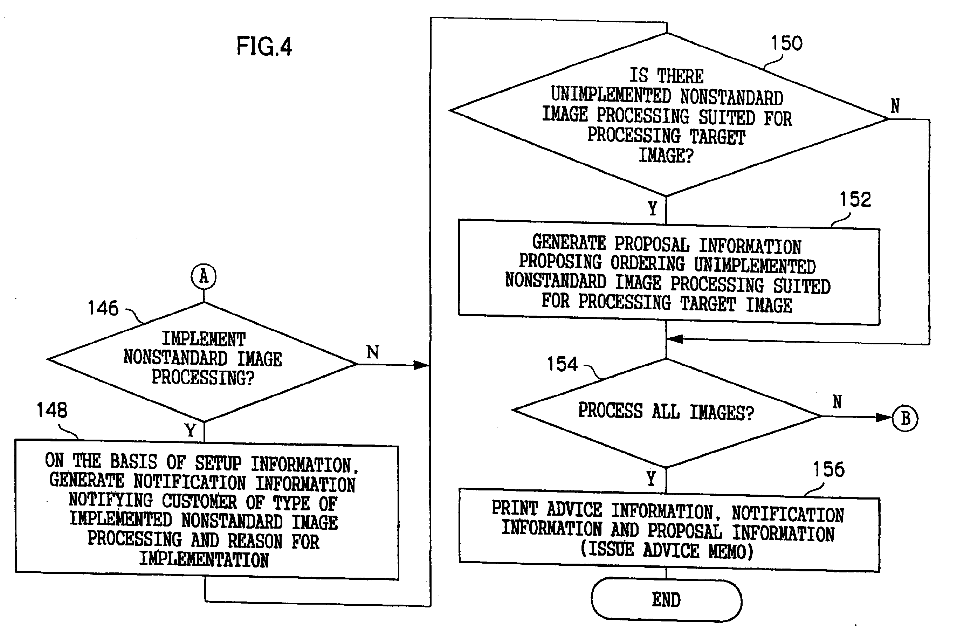

The image data, with respect to which image processing was conducted by the image processor 38, is outputted to the photographic printer/processor 40 and used to create the photographic prints. When the request to create the photographic prints is received by the first request mode, the photographic prints created by the photographic printer/processor 40 are placed in a DPE bag or the like, sent from the processing station 14 to the order receiving center 12, and handed to the customer visiting the order receiving center 12 in order to pick up the photographic prints. When the images for which photographic prints are to be created are images obtained by the customer shooting a subject using a DSC (images for which the creation of photographic prints has been requested by the first or second request mode), advice memo issuance processing is implemented in the computer 34 concurrently with the creation of the photographic prints in the photographic printer/processor 40. This advice memo issuance processing will be described below with reference to the flow charts of Figs. 3 and 4.

It should be noted that the advice memo issuance processing is processing that is implemented by the CPU of the computer 34 implementing an advice memo issuance program, and is implemented using, as a unit, a series of shot images for which the creation of photographic prints has been simultaneously requested by a single customer. In step 120, the data of the image file (EXIF format) corresponding to optional shot images of the series of shot images is referenced, whereby the model of the camera (DSC) that the customer used for the shooting is identified.

Incidentally, specification information (information representing types of flash modes and type of shooting modes with which DSCs are disposed is included in this specification information) representing the specifications of various types of DSCs that are currently on the market (and for which there is the potential that customers might be using those types) is respectively registered for each DSC model in the photo-related information DB 48 of the storage device 46. Each time the camera manufacturers 18 market a new DSC model, specification information representing the specification of that DSC is sent to the data center 16 via the computers 52, and the specification information that the computer 44 receives is registered by being stored in the photo-related information DB 48 of the storage device 46.

In step 122, the information representing the model of the DSC identified in step 120 is sent to the computer 44 of the data center 16, whereby a request is made to send the specification information of that DSC model, and the specification information of that DSC model that is read by the computer 44 from the photo-related information DB 48 of the storage device 46 and sent is received, whereby the specification information of that DSC model is obtained from the data center 16. In step 124, the specification information obtained from the data center 16 is referenced, whereby all of the shooting modes disposed in the DSC that the customer used for the shooting are identified, and an optimum shooting mode is determined, on the basis of the results of identifying the shooting modes, for each representative scene class (subject type) having the potential to have been photographed as shot images.

In step 126, unprocessed shot images of the series of shot images become the processing target, and the image data of the processing target shot images and the setup information set by the auto setup processing are imported. In step 128, the class (subject type) of the scene photographed in the processing target shot images is identified on the basis of the results of the scene analysis set in the setup information imported in step 126, and the optimum shooting mode corresponding to the identified scene class of all of the shooting modes set in the DSC that the customer used for the shooting is determined.

In step 130, the data (data representing the shooting conditions) of the image files of the processing target shot images is referenced, whereby the shooting mode used during the shooting is identified. In step 132, it is determined whether the shooting mode identified in step 130 matches the optimum shooting mode determined in step 128. It should be noted that step 130 corresponds to an identification section pertaining to the invention, and that step 132, together with step 102 of the auto setup processing and steps 120 to 128, corresponds to the determination section pertaining to the invention.

When the determination in step 132 is affirmative, the advice memo issuance processing proceeds to step 136. When the determination in step 132 is negative, the advice memo issuance processing proceeds to step 132 because it can be determined that the processing target shot image is not one for which the optimum shooting mode was selected during the shooting, advice information that recommends, to the customer, the selection of the optimum shooting mode in relation to the shooting operation of the processing target shot image is generated, and the advice memo issuance processing proceeds to step 136 after the generated advice information is temporarily stored in the HDD. Step 134 corresponds to a generation section pertaining to the invention.

As an example, when it is detected by the scene analysis that a face image region of an area ratio of a predetermined value or more is present in the substantial center portion of the shot image, it can be determined that the class of the scene photographed in the shot image is a "portrait" (the subject type of the main subject is a person's face). Because most common DSCs are disposed with a "portrait mode" as a shooting mode for appropriately shooting the above scene, it is determined in prior step 128 that the optimum shooting mode is the "portrait mode" when it is determined that the scene class is a "portrait".

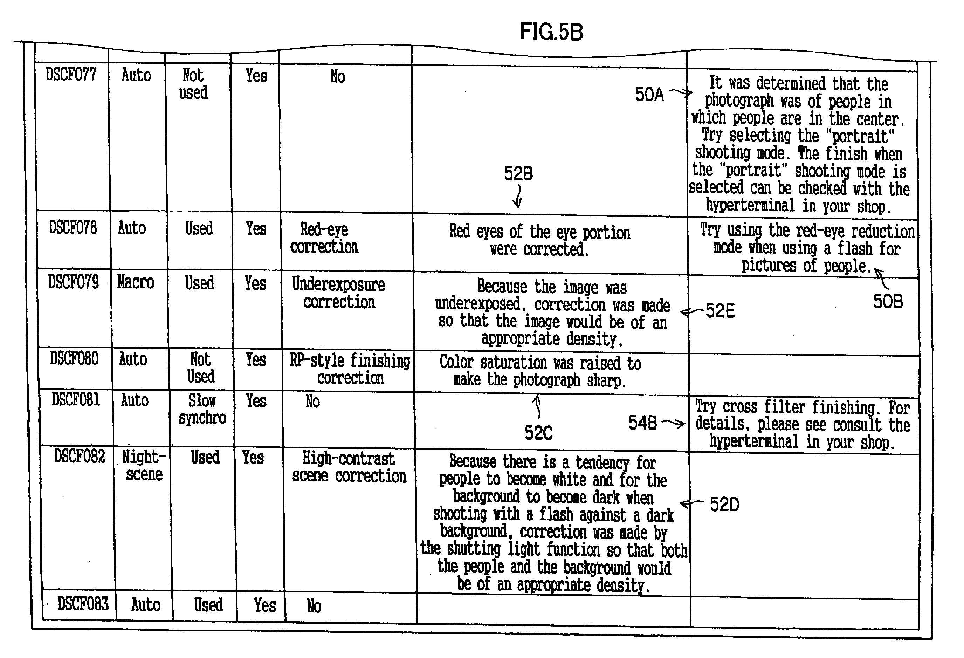

When the shot image in which the above scene is photographed was shot by a shooting mode other than the "portrait mode", the determination in step 132 is negative, the advice memo issuance processing proceeds to step 134, and advice information recommending to the customer the use of the "portrait mode" is generated. One example of this advice information is shown in Fig. 5B as comment 50A. As suggested in comment 50A ("It was determined that that the photograph was of people in which people are in the center. Try selecting the 'portrait' shooting mode."), the advice information can be configured by text information representing advice to the customer.

In the present embodiment, because it is also possible for a customer to check, via the hyperterminal 24, the difference in the finish of the photographic print in a case where the advice represented by the advice information is adopted, a comment guiding the customer to use the hyperterminal 24 ("The finish when the 'portrait' shooting mode is selected can be checked with the hyperterminal in your shop.") is also added to comment 50A.

In step 136, the data (data representing the shooting conditions) of the images file of the processing target shot images is referenced, whereby it is determined whether or not a flash was used during the shooting of the processing target shot image. When the determination is affirmative, the advice memo issuance processing proceeds to step 142, where it is determined, on the basis of the scene analysis set in the setup information imported in step 126, whether or not the processing target shot image is of poor image quality resulting from the flash being used during the shooting. It should be noted that steps 136 and 142 correspond to the determination section pertaining to the invention.

When the determination in step 142 is negative, the advice memo issuance processing proceeds to step 146 without any processing being conducted. When the determination in step 142 is affirmative, the advice memo issuance processing proceeds to step 144, where advice information relating to flash use in the shooting operation of the processing target shot image is generated, and the advice memo issuance processing proceeds to step 146 after the generated advice information is temporarily stored in the HDD. Step 144 also corresponds to the generation section pertaining to the invention.

As an example, when it is detected by the scene analysis that an eye portion region in which there is poor color tone, such as red eyes or gold eyes, is present in the shot image, it is verified that a flash mode (red-eye reduction mode) for reducing the occurrence of red eyes is disposed in the DSC that the customer used for the shooting, and the flash mode during the shooting identified by referencing the data of the image files of the processing target shot images was a mode other than the red-eye reduction mode, it is determined that the poor color tone in the eye portion region is the result of erroneous selection of the flash mode during the shooting.

In this case, the determination in step 142 is affirmative and the advice memo issuance processing proceeds to step 144, where advice information recommending to the customer the use of the "red-eye reduction mode" flash mode is generated as advice information relating to flash use. An example of this advice information is shown in Fig. 5B as comment 50B ("Try using the red-eye reduction mode when using a flash for pictures of people.").

As an example, when it is detected by the scene analysis that exposure during shooting of the processing target shot image is insufficient and it is determined in prior step 128 that the shooting mode for shooting a subject in the distance (e.g., "landscape mode") is the optimum shooting mode, it can be determined that the insufficient exposure resulted from trying to eliminate insufficient exposure by using the flash, regardless of whether the main subject is present at a distance that the light of the flash cannot reach. In this case, the determination in step 142 is negative, the advice memo issuance processing proceeds to step 144, where advice information recommending to the customer an operation for correcting exposure instead of using the flash when shooting a subject at a distance is generated as advice information relating to flash use.

It should be noted that, because the capability of the flash disposed in the DSC that the customer used during the shooting can be determined on the basis of the specification information obtained from the data center 16, advice information may also be generated that specifically informs the customer of the maximum distance between the camera and the subject for which use of the flash is effective.

When a flash was not used during the shooting of the processing target shot image, the determination in step 136 is negative and the advice memo issuance processing proceeds to step 138, where it is determined whether or not to recommend using the flash to the customer on the basis of the type of nonstandard image processing to be implemented and the result of the scene analysis set in the setup information imported in step 126. It should be noted that step 138 also corresponds to the determination section pertaining to the invention. When the determination in step 138 is negative, the advice memo issuance processing proceeds to step 146 without any processing being conducted. When the determination in step 142 is affirmative, the advice memo issuance processing proceeds to step 140, where advice information recommending to the customer the use of the flash in relation to the shooting operation of the processing target shot image is generated, and the advice memo issuance processing proceeds to step 146 after the generated advice information is temporarily stored in the HDD. Step 140 also corresponds to the generation section pertaining to the invention.

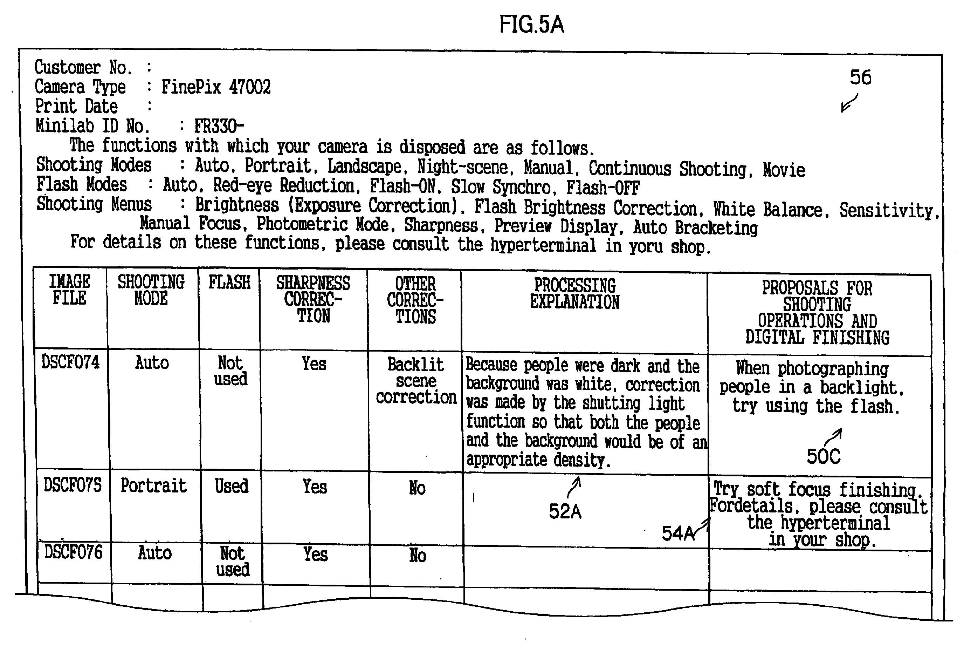

As an example, information designating the implementation of hyper-tone processing (this processing is implemented when the scene photographed in the shot image is a backlit scene or a high-contrast scene) as the nonstandard image processing is included in the setup information. When it is determined in prior step 128 that the shooting mode for shooting a subject at a relatively close distance (e.g., the "portrait mode" or the "micromode") is the optimum shooting mode, it can be determined that the image quality of the shot image will be improved by using the flash. For this reason, in this case, the determination in step 138 is affirmative and the advice memo issuance processing proceeds to step 140, where advice information recommending to the customer the use of the flash is generated. An example of this advice information is shown in Fig. 5A as comment 50C ("When photographing people in a backlight, try using the flash.").

It should be noted that the advice information pertaining to the invention is not limited to the examples described in correspondence with steps 134, 144, and 140. For example, when it is detected that the shot image is blurry overall, advice information recommending to the customer "Hold the camera steady or use a tripod when shooting" and advice information recommending to the customer "Increase the shutter speed or open the aperture" may be selectively generated in accordance with the shutter speed and aperture during shooting. Also, when two people are present in the shot image as the main subjects and it is detected that the shot image is focused on an object behind the two people, advice information recommending to the customer "Determine the overall composition while pressing the shutter release button halfway so that the camera is focused on one of the people" may also be generated.

In step 146, the setup information is referenced, whereby it is determined whether implementation of the nonstandard image processing is instructed. When the determination is negative, the advice memo issuance processing proceeds to step 150 without any processing being conducted. When the determination in step 146 is affirmative and the advice memo issuance processing proceeds to step 150, where notification information for notifying the customer of the type of implemented nonstandard image processing and the reason for the implementation is generated on the basis of the setup information, and the advice memo issuance processing proceeds to step 150 after the notification information is temporarily stored in the HDD. It should be noted that steps 146 and 148 correspond to the generation section.

Thus, for example, when it is determined, as a result of the scene analysis, that the scene photographed in the shot image is a backlit scene and implementation of hyper-tone processing is instructed as the nonstandard image processing, notification information for notifying the customer of the backlit scene correction processing (hyper-tone processing) and the reason for the implementation is generated in step 148. An example of this notification information is shown in Fig. 5A as comment 52A ("Because the person was dark and the background was white, correction was made by the shutting light function so that both the people and the background would be of an appropriate density.").

When, for example, implementation of red-eye correction processing is instructed as the nonstandard image processing, notification information for notifying the customer of the implementation of the red-eye correction processing and the reason for the implementation is generated in step 148. An example of this notification information is shown in Fig. 5B as comment 52B ("Red eyes of the eye portion were corrected.").

When, for example, implementation of RP-style finishing correction processing is instructed as the nonstandard image processing, notification information for notifying the customer of the implementation of the RP-style finishing correction processing and the reason for the implementation is generated in step 148. An example of this notification information is shown in Fig. 5B as comment 52C ("The color saturation was raised to make the photograph sharp.").

When, for example, it is determined, as a result of the scene analysis, that the scene photographed in the shot image is a high-contrast scene and implementation of hyper-tone processing is instructed as the nonstandard image processing, notification information for notifying the customer of the high-contrast scene correction processing (hyper-tone processing) and the reason for the implementation is generated in step 148. An example of this notification information is shown in Fig. 5B as comment 52D ("Because there is a tendency for people to become white and for the background to become dark when shooting with a flash against a dark background, correction was made by the shutting light function so that both the person and the background would be of an appropriate density.").

It should be noted that the notification information is not limited to information notifying the customer of information relating to implemented nonstandard image processing. For example, as shown in comment 52E ("Because the image was underexposed, correction was made so that the image would be of an appropriate density.") in Fig. 5B, the customer may also be notified of information relating to standard image processing (as an example, comment 52E notifies the customer of the processing conditions of the density conversion processing that is the nonstandard image processing).

In step 150, it is determined, on the basis of the result of the scene analysis with respect to the processing target shot image and the optimum shooting mode determined in step 128, whether or not there is nonstandard image processing that is appropriate (effective in terms of image quality) when a photographic print of the processing target shot image is to be created and with respect to which implementation has not been instructed by the setup information. When the determination in step 150 is affirmative, the advice memo issuance processing proceeds to step 152, where proposal information, for proposing that the customer order nonstandard image processing that is appropriate when a photographic print of the processing target shot image is to be created and with respect to which implementation has not been instructed, is generated. After the proposal information is temporarily stored in the HDD, the advice memo issuance processing proceeds to step 154. It should be noted that steps 150 and 152 correspond to the generation section, and the proposal information corresponds to the information that is added to the advice information by the generation section.

Thus, for example, when the face image region is extracted as a result of the scene analysis with respect to the processing target shot image, it is determined in step 128 that the "portrait mode" is the optimum shooting mode, and implementation of cross filter processing has not been instructed as the nonstandard image processing, then the determination in step 150 is affirmative and the advice memo issuance processing proceeds to step 152, where proposal information, for proposing that the customer order soft focus processing as the nonstandard image processing that is appropriate when a photographic print of the processing target shot image is to be created and with respect to which implementation has not been instructed, is generated. An example of this proposal information is shown in Fig. 5A as comment 54A ("Try soft focus finishing.").

It should be noted that a comment ("For details, please consult the hyperterminal in your shop.") guiding the customer to use the hyperterminal 24 may also be added to comment 54A. Even when it is determined that the optimum shooting mode is the "micromode", proposal information for proposing that the customer order soft focus processing may also be generated.

When it is determined that the scene photographed in the shot image is a night scene as a result of the scene analysis with respect to the processing target shot image, and it is determined in step 128 that the "night-scene mode" is the optimum shooting mode, and implementation of cross filter processing has not been instructed as the nonstandard image processing, then the determination in step 150 is affirmative and the advice memo issuance processing proceeds to step 152, where proposal information for proposing that the customer order cross filter processing as the nonstandard image processing is generated. An example of this proposal information is shown in Fig. 5B as comment 54B ("We propose cross filter finishing."). It should be noted that a comment ("For details, please consult the hyperterminal in your shop.") guiding the customer to use the hyperterminal 24 may also be added to comment 54B.

In a case where, for example, image processing for improving the sense of realism and the sense of speed in an image by synthesizing an image, in which the image is offset in a constant direction, is prepared as the nonstandard image processing with respect to an image in which the subject is a moving object, when it is determined in step 128 that a "sports mode" is the optimum shooting mode, and that implementation of blur processing has not been instructed as the nonstandard image processing, proposal information for proposing that the customer order blur processing as the nonstandard image processing may also be generated.

In step 154, it is determined whether or not the above processing (the processing of steps 126 to 152) has been conducted with respect to the entire series of shot images for which the creation of photographic prints was simultaneously requested by the single customer. When the determination is negative, the advice memo issuance processing returns to step 126. Thus, processing from step 126 on is respectively conducted with respect to the entire series of shot images. Of the series of shot images, advice information is generated with respect to shot images for which the determination in step 132 was negative or for which the determination in step 142 or step 138 was affirmative, notification information is generated with respect to shot images for which the determination in step 146 was affirmative, and proposal information is generated with respect to shot images for which the determination in step 150 was affirmative.

When the processing of steps 126 to 152 is conducted with respect to the entire series of shot images, the determination in step 154 is affirmative and the advice memo issuance processing proceeds to step 156, where the advice information, the notification information, and the proposal information generated by the above processing is printed on paper as text by the printer 42, an advice memo such as the one shown as an example in Fig. 5 is issued, and the advice memo issuance processing is concluded. It should be noted that the advice memo corresponds to the print-out.

A comment 56 describing the specification (functions installed in the DSC) of the DSC the customer used for the shooting is also printed, on the basis of the specification information obtained in prior step 122, in the advice memo shown in Fig. 5 (a comment 56, in which items relating to the shooting modes, the flash (firing) modes, and shooting menus are listed, is shown in Fig. 5 as an example).

The advice memo issued as described above is sent, together with the photographic prints created by the photographic printer/processor 40, from the processing station 14 and, when the request for the photographic processing was received by the first request mode, delivered to the customer at the order receiving center 12 at the same time that the photographic prints are delivered to the customer (e.g., it may be delivered in a DPE bag, or a shop clerk of the order receiving center 12 may directly hand it to the customer). In this manner, the advice memo corresponds to the advice information and the finishing memo. When the request for the photographic processing was received by the second request mode, the created photographic prints are, for example, delivered to the customer's home or delivered to the customer at the convenience store nearest to the customer's home. In this case also, the advice memo is delivered to the customer together with the photographic prints.

Thus, by referencing the advice information printed on the advice memo, the customer can deepen his/her understanding with respect to the functions of the DSC used for shooting and become acquainted with the shooting operations thereof, whereby the photographic shooting techniques of the customer are improved. Also, by referencing the notification information printed on the advice memo, the customer can understand the type of nonstandard image processing implemented during the creation of the photographic prints and understand the reason for the implementation. Moreover, by referencing the proposal information printed on the advice memo, the customer can become aware of the existence of nonstandard image processing for improving the image quality of the photographic prints and can order the nonstandard image processing when reordering the creation of photographic prints or when requesting the creation of other photographic prints. Moreover, by referencing the comment (comment 56 in Fig. 5) representing the specification of the DSC printed on the advice memo, the customer can also grasp the specification (functions installed in the DSC) of the DSC used for shooting. Thus, improvement of services with respect to customers conducting photographic operations can be realized, and the trust of customers with respect to the order receiving center 12 and the processing station 14 can be improved.

Also, when the advice memo issuance processing is conducted, the computer 44 of the processing station 14 stores, in the photo-related information DB 48, information representing erroneous operations by the customer, such as an erroneous selection of a shooting mode and an erroneous selection of a flash mode, identified by the advice memo issuance processing on the basis of the determination result of step 132 of the advice memo issuance processing (see Fig. 3). This information is referenced by the camera manufacturers 18 and, when numerous customers mistake the selection of a shooting mode, becomes useful in improving the DSC and in future product development, such as altering the design of the DSC so that the customers can intuitively understand the selection switches of the shooting modes.

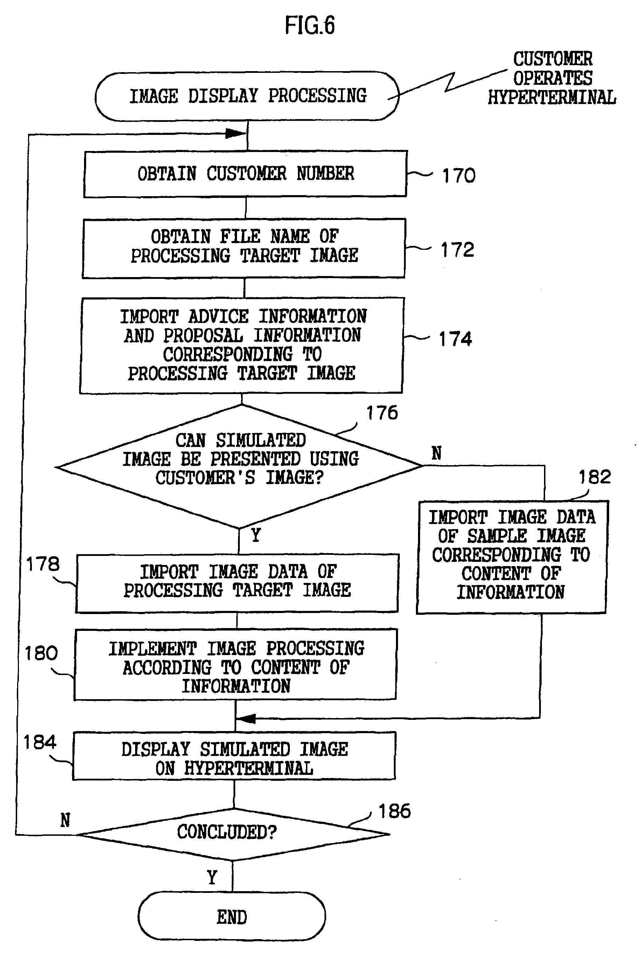

When the customer operates the hyperterminal 24 disposed at the order receiving center 12 on the basis of the comments written in the advice memo with, for example, the purpose of checking the difference in the finish of the photographic prints when shooting operations are conducted in accordance with the advice represented by the advice information or the purpose of checking the difference in the finish of the photographic prints when the customer has ordered specific nonstandard image processing in accordance with the proposal information, image display processing is implemented by the computer 44 of the processing station 14. This image display processing will be described below with reference to the flow chart of Fig. 6. It should be noted that the image display processing corresponds to a display control section and that the hyperterminal 24 corresponds to a terminal.

In step 170, the customer number of the customer operating the hyperterminal 24 is obtained (received) from the hyperterminal 24. The customer number is obtained by the customer number being inputted by the customer via a keyboard or the like of the hyperterminal 24, or by a card-like recording medium that the customer carries being inserted into a cartridge or the like of the hyperterminal 24 so that the customer number is read by the cartridge from the recording medium.

The customer operating the hyperterminal 24 also inputs, via the keyboard or the like, the file name (as shown in Fig. 5, this file name is written in the advice memo) of the shot images (processing target shot images) with respect to which the finish of the photographic prints is to be checked on the basis of the comments written in the advice memo. In step 172, the file name of the processing target shot images inputted by the customer is obtained (received) from the hyperterminal 24.

In step 174, the processing target shot images are specified using the customer number obtained in step 170 and the file name obtained in step 172 as a key, and information (at least one of the proposal information and the advice information printed as the advice memo) corresponding to the processing target shot images is imported. In step 176, it is determined whether or not the content (the content of the advice represented by the advice information and the content of the proposal in the proposal information) of the information imported in step 174 is content that can present a simulated image using the image data of the shot images received from the customer.

When the determination in step 176 is affirmative, the image display processing proceeds to step 178, where the image data of the processing target shot images is imported. In step 180, image processing is implemented in accordance with the content of the information imported in step 174, whereby a shooting operation is conducted in accordance with the advice represented by the advice information and image data is generated of a simulated image representing the finish of a photographic print obtained when the nonstandard image processing proposed by the proposal information is ordered.

As an example, when the advice information corresponding to the processing target shot images is content recommending shooting in the portrait mode with respect to shot images in which scenes where people are the principal subjects were shot in a shooting mode other than the portrait mode, the finish of a photographic print in a case where the portrait mode is selected in accordance with the advice represented by the advice information can be simulated by conducting soft focus processing. In this case, the determination in step 176 is affirmative, and soft focus processing is conducted in step 180 with respect to the image data of the shot images, whereby image data of a simulated image is generated.

When the determination in step 176 is negative, the image display processing proceeds to step 182, where, of image data of sample images prepared in advance, image data of sample images corresponding to the content of the information imported in step 174 is imported. For example, when the advice information corresponding to the processing target shot images is content recommending shooting in the sports mode with respect to shot images in which sports scenes were shot in a shooting mode other than the sports mode, it is difficult to simulate the finish of a photographic print where the sports mode is selected in accordance with the advice represented by the advice information. In this case, the determination in step 176 is negative, and in step 182, image data of sample images representing an image where the sports mode is selected and an image where a shooting mode other than the sports mode is selected is imported.

When the processing of steps 178 and 180 or step 182 is conducted, the image display processing proceeds to step 184, where the image data of the simulated image generated in step 180 or the image data of the sample image (simulated image) imported in step 182 is sent to the hyperterminal 24, whereby the simulated image is displayed on the display of the hyperterminal 24. By viewing the simulated image, the customer can conduct shooting operations in accordance with the advice represented by the advice information, and can visually and easily check the difference in the finish of a photographic print when the nonstandard image processing proposed by the proposal information is ordered.

In step 186, it is determined whether or not the image display processing is concluded. When another file name of shot images is newly inputted by another customer as the file name of the processing target shot images, the determination in step 186 is negative, the image display processing returns to step 172, and processing from step 172 on is repeated using, as the processing target, the shot images for which the file name has been newly inputted. When the determination in step 186 is affirmative, the image display processing is concluded.

It should be noted that, although an embodiment has been described above in which advice information and the like is generated by the computer 34 of the processing station 14 with respect to images for which the creation of photographic prints is requested, the invention is not limited thereto. For example, when a computer that the customer owns is an environment that can reference the specification information stored in the photo-related information DB 48 of the storage device 46, it is possible for processing such as the generation of the advice information to be conducted by the computer that the customer owns, by implementing the program pertaining to the invention in the computer that the customer owns.

Also, although an example has been described above in which the advice information and the like is presented to the customer when the photographic prints created in accordance with the request from the customer are delivered to the customer, the invention is not limited thereto. For example, in an embodiment in which requests for photographic processing are received at an order receiving center or online, the advice information may also be presented at a time such as when the request for the creation of photographic prints from the customer is received (before creating the photographic prints). Because the potential for image processing proposed by the advice information to be ordered by the customer increases by presenting the various information, and particularly the proposal information, to the customer at the above time, presentation of the information at the above time is particularly effective.

A second embodiment of the invention will be described below. Because the image forming system pertaining to the second embodiment has a configuration that is the same as that of the first embodiment shown in Fig. 1, detailed description thereof will be omitted.

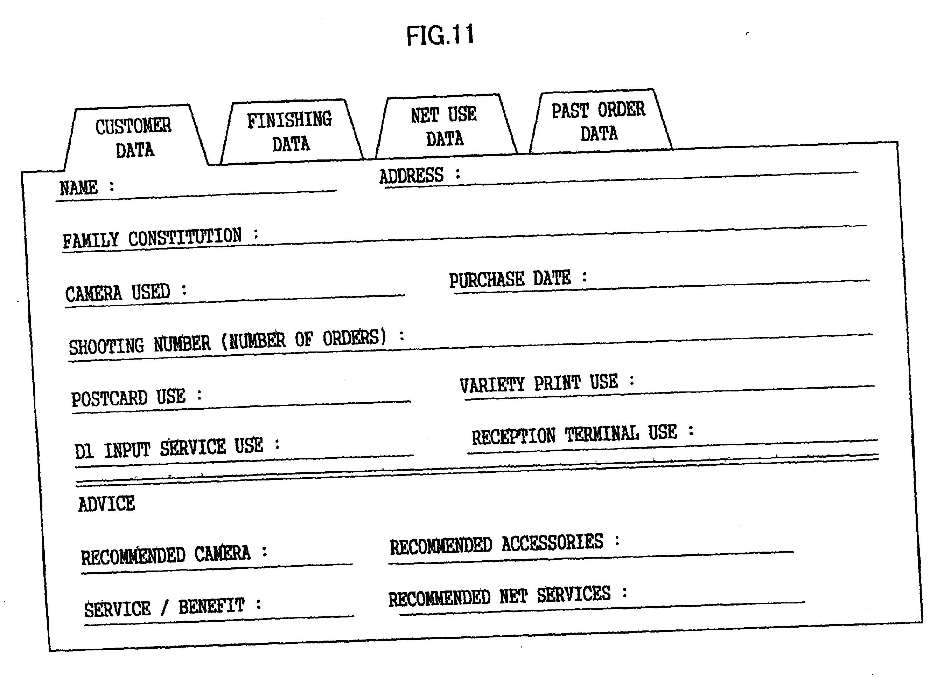

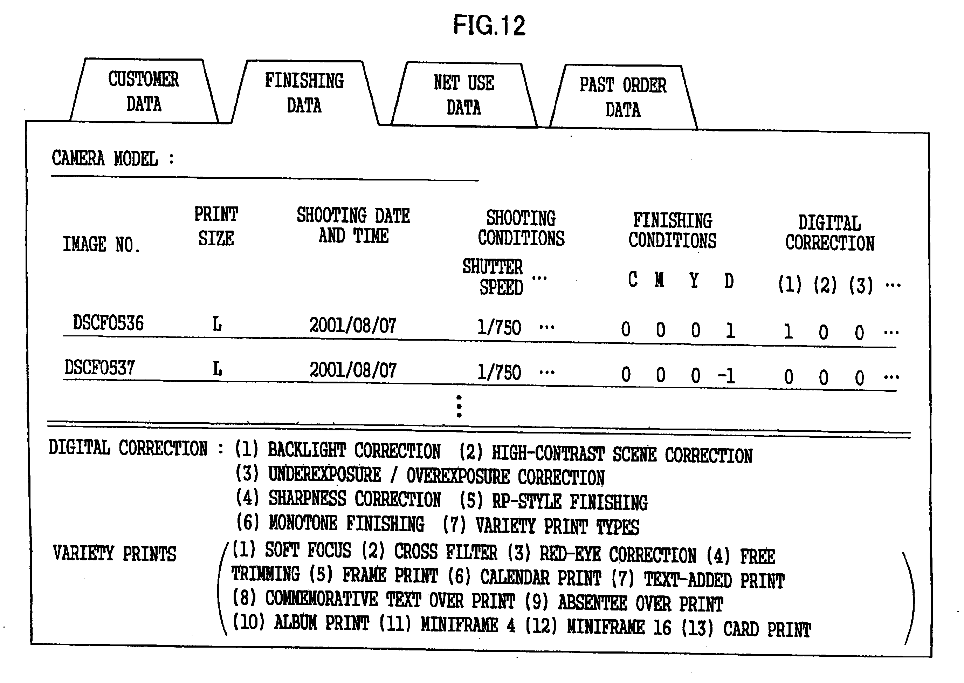

Customer information is stored in the HDD of the computer 20 disposed at the order receiving center 12, and information stored in the photo-related information DB 48 of the data center 16 can be also be referenced via the communications network 50. Thus, because customer information shown as an example in Fig. 11, setup information shown as an example in Fig. 12 (represented by the finishing data in Fig. 12), information relating to the camera that the customer owns, and information relating to specific finishing and images ordered in the past by the customer can be displayed on the display of the computer 20 at the time the photographic prints (image outputted medium) are delivered to the customer, it becomes possible for a shop clerk of the order receiving center 12 who has referenced the above information displayed on the display to provide the following kinds of services to the customer.

That is, by referencing information relating to the camera that the customer owns, the shop clerk of the order receiving center 12 can identify the model, the purchase date, the number of years used, the shooting number, etc. of the camera that the customer owns. Thus, for example, if the shooting number of the customer to whom photographic prints are delivered is relatively large, the shop clerk can determine that the customer is a heavy user and has an interest in cameras, whereby it becomes possible for the shop clerk to introduce the customer to new camera models and accessories. The shop clerk can also offer, with the intention of enticing the customer to purchase something, services such as lending a new camera model to the customer at no charge or at a low fee for a certain period of time.

Moreover, because the shop clerk of the order receiving center 12 can grasp the images that the customer has ordered in the past, the shop clerk can also identify cases where the customer has ordered two prints of the same image. Because it is difficult to distinguish whether images that have been shot using a DSC are images recorded on some kind of photographic film, like images recorded on photographic film, and file names resemble one another, it is difficult to discriminate images shot using a DSC and difficult for the customer to determine whether the images are images for which the creation of photographic prints has been ordered in the past. With respect thereto, if the order receiving center 12 manages information such as the shooting dates, shooting locations, and shooting times of images for which the creation of photographic prints thereof has been ordered in the past, the order receiving center 12 can determine, by checking this information, whether or not the images are images that the customer has ordered in the past.

Also, because the shop clerk of the order receiving center 12 can grasp, by referencing the information relating to specific finishing, the history of specific finishing that the customer has ordered in the past, it becomes possible for the shop clerk to introduce this year's new templates and recommend using postcards when, for example, the customer has ordered postcards in the past. Additionally, because information such as the address, family name, and e-mail address of the customer can be stored in advance as customer information, there is no need for the customer to write this information in an order slip when using postcards. The shop clerk can also propose editing, such as creating composite postcards of past photographic images of the customer's children and recent photographic images of the same children, at that location, and it also becomes possible to propose interesting postcards.

Incidentally, of the services that can be provided by the shop clerk at the order receiving center 12, there is the potential for evaluating photographic prints and providing advice with respect to customer dissatisfaction relating to photographic prints to take up time (even if the shop clerk doing so is experienced), become a burden to the shop clerk of the order receiving center 12, and become an obstacle to the duties of the order receiving center 12. It is for this reason that the hyperterminal 24 is disposed at the order receiving center 12 in the present embodiment. Processing in the hyperterminal 24 disposed at the order receiving center 12 will be described below.

In the present embodiment, when a customer, who has requested the creation of photographic prints by the first request mode and visits the order receiving center 12 to pick up the created photographic prints, checks the received photographic prints and is dissatisfied with the image quality thereof, the customer operates the keyboard 28 or the like of the hyperterminal disposed in the order receiving center 12 and inputs information requesting advice.

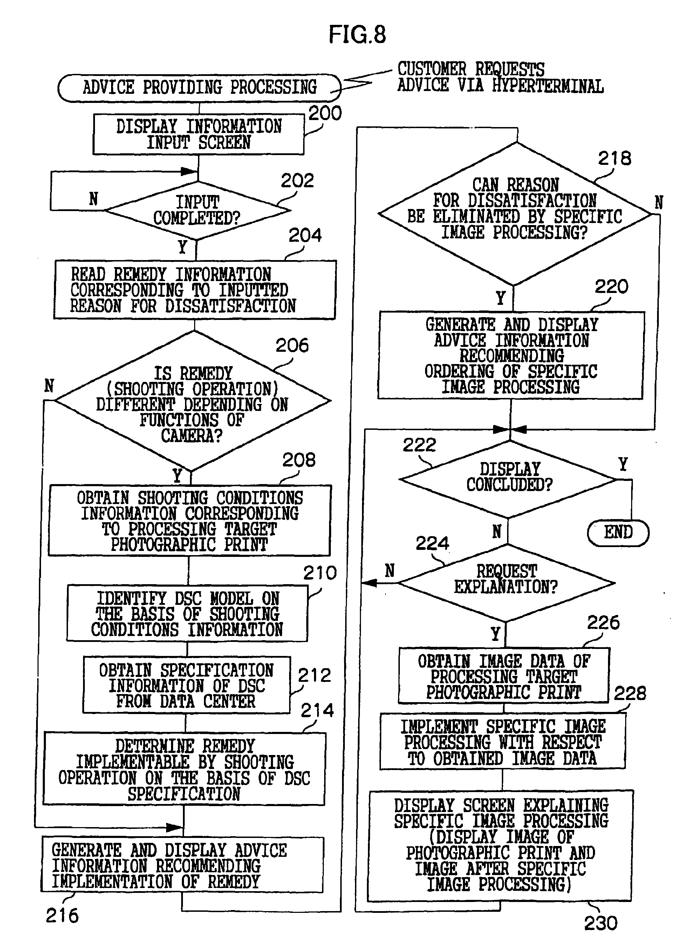

An advice providing program for implementing advice providing processing (described later) is preinstalled in the HDD of the hyperterminal 24. When the information requesting advice is inputted, the advice providing program is read from the HDD and implemented by the CPU of the hyperterminal 24, whereby the advice providing processing is conducted by the hyperterminal 24. This advice providing processing will be described below with reference to the flow chart of Fig. 8. It should be noted that the advice providing processing corresponds to the generation section pertaining to the invention.

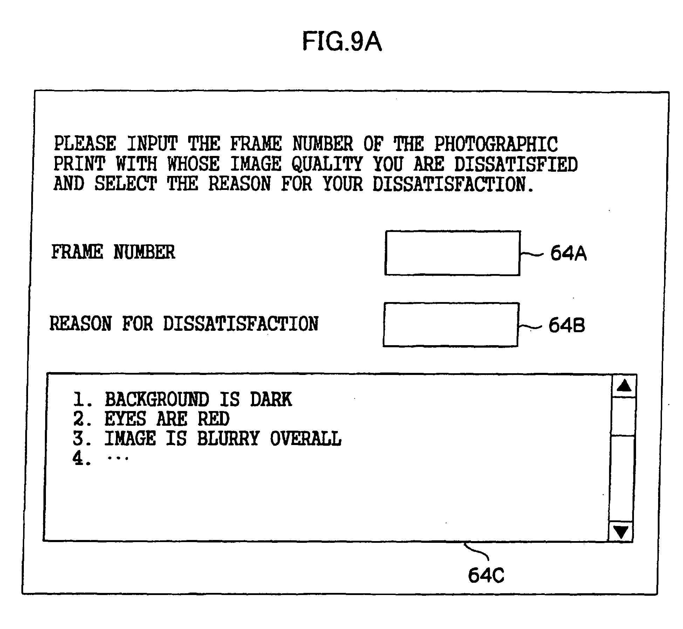

In step 200, an information input screen for the customer to input the reason for the dissatisfaction with respect to the image quality of the photographic prints is displayed on the display 26, as shown in the example of Fig. 9A. The information input screen shown in Fig. 9A is disposed with an input field 64A for inputting the frame number of the photographic print with whose quality the customer is dissatisfied, an input field 64B for inputting the reason for the dissatisfaction with respect to the image quality of the photographic print, and a display field 64C in which reasons for dissatisfaction with respect to the image quality are displayed as options in a list. In step 202, it is determined whether or not the input by the customer is completed, and step 202 is repeated until the determination is affirmative.

Various reasons for dissatisfaction, which customers have the possibility of feeling in relation to image quality of photographic prints, and remedy information, which represents remedies for eliminating the dissatisfaction, are mutually corresponded and stored in the HDD of the hyperterminal 24 pertaining to the present embodiment, as shown in the example of Table 1. In this manner, the HDD of the hyperterminal 24 corresponds to a storage section.

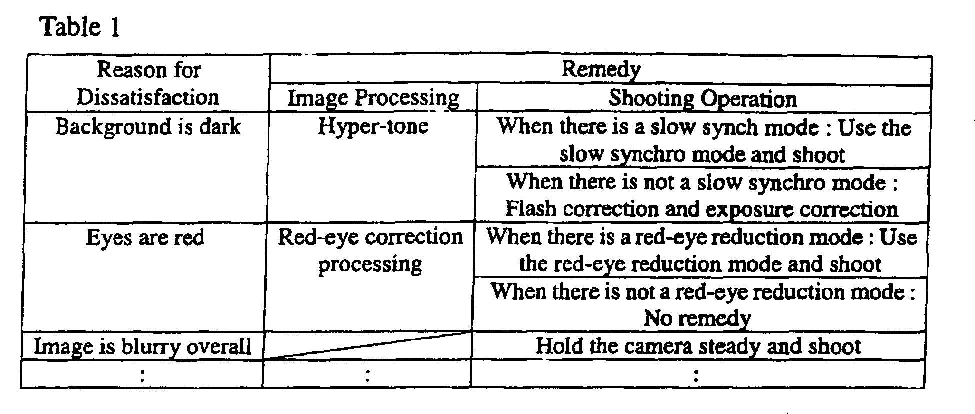

Remedies for eliminating the dissatisfaction of the customer can be broadly divided into image processing remedies and shooting operation remedies, and these remedies are distinguished are stored in the example of Table 1. Depending on the reason for the customer's dissatisfaction, there are also cases where several types of shooting operation remedies for eliminating the dissatisfaction are conceivable in accordance with the functions with which the DSC 60 that the customer uses for shooting is disposed.

For example, when the reason for the customer's dissatisfaction is that the "Background is dark", an example of a shooting operation might be "Use the slow synchro mode and shoot" if a slow synchro mode is disposed as a flash mode in the DSC 60 that the customer uses for shooting. If a slow synchro mode is not disposed in the DSC 60 that the customer uses for shooting, then the shooting operation remedy becomes "Conduct flash correction and exposure correction and shoot". For this reason, in the present embodiment, when several types of shooting operation remedies for eliminating the dissatisfaction are conceivable, remedy information representing those several types of remedies, which are separated into cases in accordance with the functions of the DSC 60, is respectively stored.

When the customer inputs the frame number into the input field 64A of the information input screen and inputs, into the input field 64B, the discrimination information of the option corresponding to the reason for dissatisfaction from the options displayed as a list in the display field 64C, the determination of step 202 is affirmative and the advice providing processing proceeds to step 204, where remedy information corresponding to the reason for the customer's dissatisfaction with respect to the image quality of a specific photographic print inputted (selected) by the customer into the input field 64B of the information input screen is read from the HDD.

From step 206 on, a shooting operation remedy for eliminating the customer's dissatisfaction with respect to the image quality of the photographic print is determined. That is, in step 206, it is determined whether or not several types of remedies (remedies that should be selected in accordance with the functions with which the camera that the customer uses for shooting is disposed) are included, as shooting operation remedies, in the remedy that the remedy information read in step 204 represents. For example, in Table 1, when the shooting operation remedy included in the read remedy information is a remedy unrelated to the functions with which the customer is disposed, such as the shooting operation remedy "Hold the camera steady and shoot" corresponding to the reason for dissatisfaction "Image is blurry overall", the above determination is negative and the advice providing processing proceeds to step 216 without any processing being conducted (the above remedy is determined to be a shooting operation remedy for eliminating the customer's dissatisfaction).

When several types of remedies are included, as shooting operation remedies, in the remedy that the remedy information represents, the determination of step 206 is affirmative and the advice providing processing proceeds to step 208, where the customer number of the customer operating the hyperterminal 24, the order number, and the frame number are sent to the computer 44 of the data center 16, whereby a request is made to send shooting conditions information (included in the image file of the shot images) corresponding to the photographic print with whose image quality the customer is dissatisfied, and the shooting conditions information read and sent by the computer 44 from the photo-related information DB 48 of the storage device 46 is received, whereby the shooting conditions information corresponding to the photographic print with whose image quality the customer is dissatisfied is obtained from the data center 16.

It should be noted that, although the customer number of the customer and the order number may be inputted by the customer into the hyperterminal 24 via the keyboard 28 or the like, because this information is also stored in the computer 20 of the order receiving center 12, it is also possible to configure the invention so that the hyperterminal 24 identifies the information by an operation in which, for example, a shop clerk of the order receiving center 12, who has been notified by a customer that the customer intends to use the hyperterminal 24, forwards in advance the information from the computer 20 to the hyperterminal 24. In step 210, the shooting conditions information obtained in step 208 is referenced, whereby the model of the camera (DSC 60) that the customer uses for shooting is identified.

Incidentally, specification information (information representing types of flash modes and type of shooting modes with which DSCs are disposed (e.g., auto, portrait, sports, landscape, macro, night-scene, manual, continuous shooting, movie, etc.) is included in this specification information) representing the specifications of various types of DSCs that are currently on the market (and for which there is the potential that customers might be using those types) is respectively registered for each DSC model in the photo-related information DB 48 of the storage device 46. Each time the camera manufacturers 18 market a new DSC model, specification information representing the specification of that DSC is sent to the data center 16 via the computers 52, and the specification information that the computer 44 receives is registered by being stored in the photo-related information DB 48 of the storage device 46.

In step 212, the information representing the model of the DSC 60 identified in step 210 is sent to the computer 44 of the data center 16, whereby a request is made to send the specification information of the DSC 60 and the specification information of the DSC 60 read and sent by the computer 44 from the photo-related information DB 48 of the storage device 60 is received, whereby the specification information of the DSC 60 is obtained from the data center 16. In step 214, the remedy information read in step 204 is compared with the specification of the DSC 60 represented by the specification information obtained in step 212, whereby a remedy that can be implemented in the DSC 60 used during shooting is determined from the shooting operation remedies for eliminating the customer's dissatisfaction.

Thus, for example, in a case where the reason for the customer's dissatisfaction is that the background is dark and a slow synchro mode is disposed as a flash mode in the DSC 60 that the customer uses for shooting, when "Use the slow synchro mode and shoot" is selected as the implementable remedy and a slow synchro mode is not disposed, "Try shooting after conducting flash correction and exposure correction" is selected the implementable remedy.

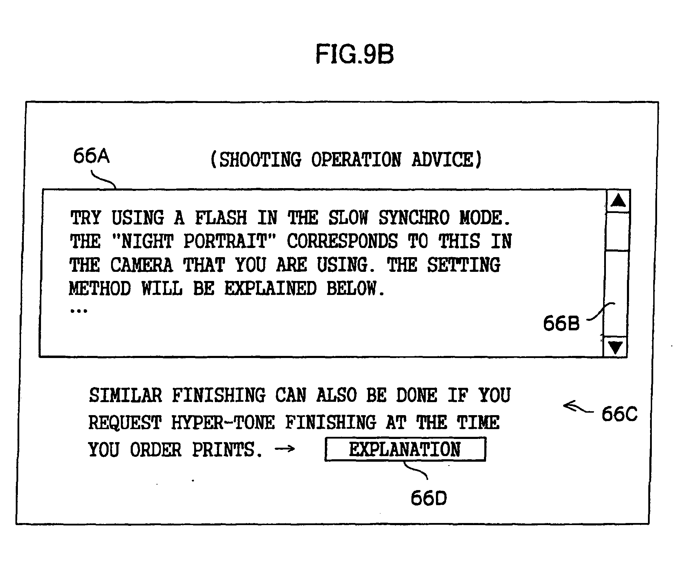

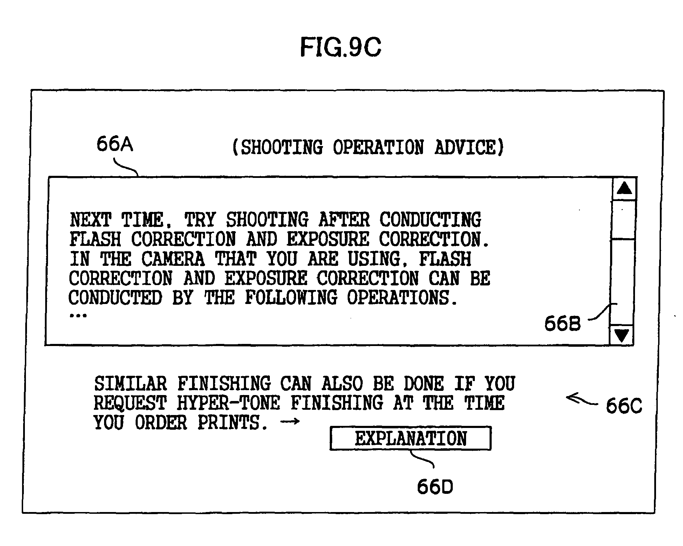

In step 216, information (advice information) representing advice recommending the implementation of the shooting operation remedy determined in steps 206 to 214 is generated, and the advice represented by the generated advice information is displayed on the display 26. Figs. 9B and 9C shows an example of a display screen displaying shooting operation advice. In this example, the advice represented by the advice information is displayed, and it is possible to scroll within a display field 66A by operating a scroll bar 66B. Thus, the customer can identify the shooting operation for eliminating the dissatisfaction that the customer feels with respect to the image quality of a specific photographic print, and improvement of services with respect to customers requesting the creation of photographic prints can be realized.

It should be noted that, depending on the model of the DSC 60, the names of various functions are not always the same. For example, what is called the "slow synchro mode" in one model might be called a "night-scene portrait mode" in another model. For this reason, in step 216, when the shooting operation remedy determined in steps 206 to 214 is a remedy using a specific function of the DSC 60, the name of the specific function in the DSC 60 that the customer uses for shooting is identified on the basis of the specification information obtained in prior step 212 and the advice is generated and displayed (Fig. 9B shows an example) using the identified name. Thus, the customer can more easily understand the content of the displayed advice.

In step 218, it is determined whether or not information representing an image processing remedy is included in the remedy information read in prior step 204, whereby it is determined whether or not the dissatisfaction of the customer with respect to the image quality of the specific photographic print can be eliminated by implementing specific image processing. When the determination is negative, the advice providing processing proceeds to step 222 without any processing being conducted. When the determination is affirmative, the advice providing processing proceeds to step 220, where information (advice information) representing advice recommending ordering specific image processing is generated and the advice represented by the generated advice information is added and displayed on the display 26 (see message 66C shown in Figs. 9B and 9C as an example).

Thus, the customer can become aware of how the dissatisfaction with respect to the image quality of a specific photographic print can be eliminated by ordering specific image processing when requesting the creation of the photographic print. It should be noted that, in the present embodiment, a button 66D for the customer to instruct additional display of an explanation with respect to the specific image processing is also displayed together with the message 66C.

In step 222, it is determined whether or not conclusion of the advice display is instructed by the customer. When the determination is affirmative, the advice providing processing is concluded. When the determination is negative, the advice providing processing proceeds to step 224, where it is determined whether or not additional display of an explanation with respect to the specific image processing is instructed by the customer. When this determination is also negative, the advice providing processing returns to step 222, and steps 222 and 224 are repeated until some kind of determination is affirmative.

When additional display of an explanation with respect to the specific image processing is instructed by the button 66D being clicked by the customer, the determination in step 224 is affirmative and the advice providing processing proceeds to step 226, where the customer number of the customer operating the hyperterminal 24, the order number, and the frame number are sent to the computer 44 of the data center 16, whereby a request is made to send image data for recording of the specific photographic print (the photographic print with whose image quality the customer feels dissatisfied) and the image data for recording that is read and sent by the computer 44 from the photo-related information DB 48 of the storage device 46 is received, whereby the image data for recording of the specific photographic print is obtained from the data center 16.

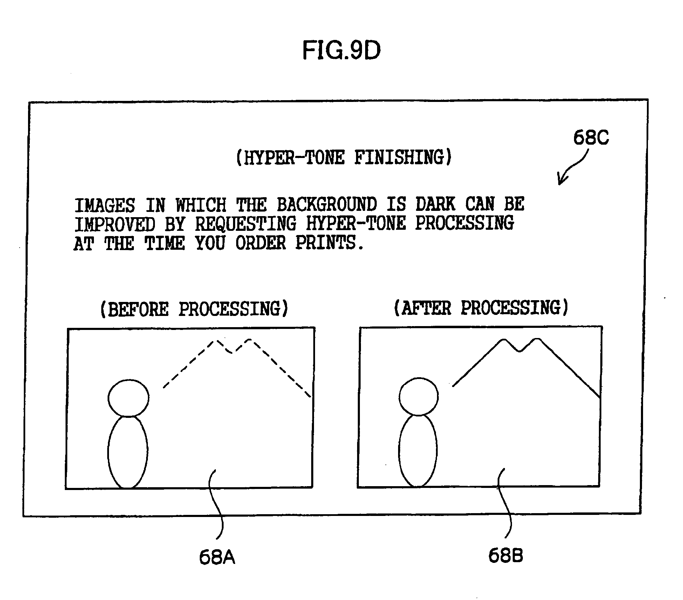

In step 228, the specific image processing is conducted with respect to the image data for recording obtained in step 226. Thus, image data representing the image of the photographic print when the specific image processing is conducted at the time of the creation of the specific photographic print can be obtained. After a screen explaining the specific image processing is displayed on the display 26 in step 230, the advice providing processing returns to step 222. In the present embodiment, a screen in which an image represented by the image data for recording obtained in step 226 (an image corresponding to the photographic print that the customer has received: image 68A), an image represented by the image data with respect to which the specific image processing has been conducted in step 228 (an image corresponding to the photographic print obtained by ordering the specific image processing at the time creation of photographic prints is requested: image 68B), and a message 68C recommending ordering the specific image processing are respectively displayed is used as the screen explaining the specific image processing, as shown in the example of Fig. 9D.

By referencing the above screen displayed on the display 26, the customer can visually and easily become aware of how the image quality of the photographic print will be improved by ordering the specific image processing when requesting the creation of photographic prints, and the improvement of services with respect to customers requesting the creation of photographic prints can be realized.

It should be noted that, in the explanation of the specific image processing, plural images, in which settings of the parameters (e.g., intensity of the correction by the specific image processing, etc.) of the specific image processing are mutually different, may be respectively generated from the image data for recording and the generated plural images may be respectively displayed in place of simply displaying images as described above. The invention may also be configured so that it is possible for the customer to instruct changes in the settings of the parameters of the specific image processing by operating the keyboard 28 or the mouse 30, and so that, each time an instruction to change the settings is inputted by the customer, the settings of the parameters are changed in accordance with the inputted instruction, specific image processing is conducted, and the displayed image is switched to an image-processed image.

The invention may also be configured so that, when a customer who has referenced the screen explaining the specific image processing and become aware of the nature of improvement to the image quality when the specific image processing is implemented wishes to recreate a specific photographic print with respect to which the specific image processing has been implemented, the recreation is automatically conducted (the recreation is requested by sending the image data and the like to the processing station 14, or the recreation is conducted at the DPR shop 12 when devices such as the image processor 38 and the photographic printer/processor 40 are disposed at the order receiving center 12).

The processing implemented by the hyperterminal 24 is not limited to the above-described advice providing processing. General advice in regard to shooting operations for improving the image quality of photographic prints is also conceivable, in addition to the remedy for eliminating dissatisfaction that customers might have with respect to the image quality of received photographic prints, as information whose provision a customer visiting the order receiving center 12 to pick up photographic prints presumably might want. Thus, when a customer desires the provision of advice in regard to shooting operations, the advice may be generated and provided by the hyperterminal 24.

Although an example was described above where the customer inputs the reasons for dissatisfaction after receiving photo print, the invention is not limited thereto. The customer may input the reasons for dissatisfaction at the time of / prior to ordering photo print, after checking the shot image on display of DSC, PC, or the hyperterminal 24.

Moreover, the information inputted by the customer is not limited to the reasons for dissatisfaction with the image quality. For example, the customer can input information about at least one of an image output (image quality), an image processing, a shooting operation, a shooting condition and the like. More particularly, inputted information is at least one of request, problem, dissatisfaction, query, and answer regarding an image output, an image processing, a shooting operation, or a shooting condition. For example, the customer can input request related to the image processing, and shooting condition such as subject type. In this case, advice information recommending specific image processing, possible improvement of shooting operation, or simulated image obtained when the specific image processing is conducted with respect to the shot image is displayed on hyperterminal 24. The customer can also input an answer to the questions displayed on hyperterminal 24.

Also, the inputted information is not limited to the information about a specific image. For example, the customer may input problems and queries about DSC that he/she uses. In this case, model of DSC is inputted by the customer or identified based on data of the shot image, and advice information that is suited for the model is provided to the customer.

The first embodiment was described above where advice information is generated on the basis of data of shot image, and the second embodiment was described where advice information is generated on the basis of information inputted by the customer. However, the invention is not limited to one of those. Advice information may be generated on the basis of both the data of the shot image and the inputted information. For example, if the customer inputted the request for portrait-style finish, proposal information proposing the order of soft focusing processing may be generated, the simulated image after soft focusing processing is displayed, or soft focusing processing may be conducted and the notification information notifying the customer of the reason for implementing the soft focusing processing is generated, even when it is determined that the soft focusing processing as the nonstandard image processing is unnecessary on the basis of the data of the shot image.

Although an embodiment in which the hyperterminal 24 was made to function as the advice device pertaining to the invention by implementing, in the hyperterminal 24, the advice providing program serving as the program stored in the storage medium pertaining to the invention was described above, the invention is not limited thereto. For example, when a computer that the customer owns is an environment that can reference the information stored in the photo-related information DB 48 of the storage device 46, it is possible to allow the computer that the customer owns to function as the advice device pertaining to the invention and to allow the hard disk drive of the PC to function as the storage device, by storing a program in advance in the recording medium 58 or a CD-R that is given to the customer from the order receiving center 12 as the recording medium pertaining to the invention and by the customer himself/herself installing and implementing the program in the computer that the customer owns. The program may also be downloaded by the customer through a computer network such as the Internet instead of recording the program in the recording medium 58 or a CD-R.

It should be noted that, although an example was described in the first and second embodiments where the generated advice information, notification information, and proposal information were conveyed (provided) to the customer as text information (advice memo), the invention is not limited thereto. The advice information, notification information, and proposal information may be conveyed (provided) as text, audio, an image, or any combination of these. Similarly, although an example was described in the second embodiment where the information input screen was displayed on a display as a way for the customer to input the reason for his/her dissatisfaction, the invention is not limited thereto. The invention may also be configured so that it is possible for the customer to input the reason for his/her dissatisfaction by voice.

Also, although embodiments were described above where the computer 34, the scanner 36, the image processor 38, and the photographic printer/processor 40 were disposed at the processing station 14, the invention is not limited thereto. These devices may also be disposed at the order receiving center 12. Also, although an example was described above where the photographic processing request according to the second request mode was received at the order receiving center 12, the invention is not limited thereto. The photographic processing request according to the second request mode may also be directly received at the processing station 14.

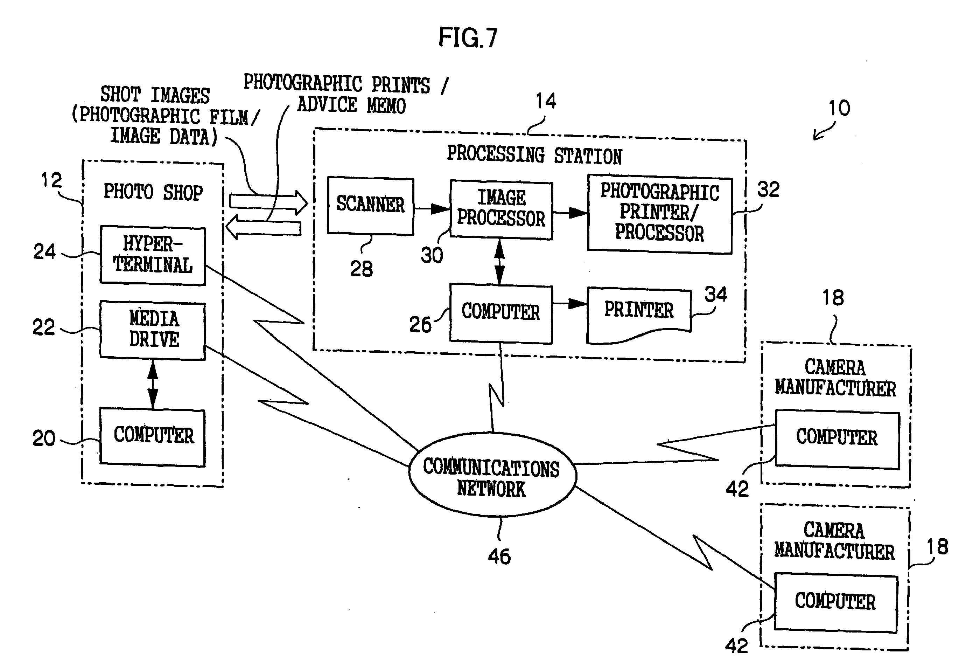

Also, although an example was described above where the data center 16 was disposed in the image forming system 10 and various information relating to photographic processing (e.g., specification information and other information) was collectively stored as the photo-related information database 48 in the storage device 46 of the data center 16, the invention is not limited thereto. For example, as shown in Fig. 7, each computer of the image forming system may be respectively connected to a communications network (any of a dedicated network comprising a dedicated communications line, the Internet, or a public phone network) 46, and the various information relating to photographic processing may be dispersed and stored in the storage devices of the computers of the image forming system 10, so that the sending and receiving of the various information relating to photographic processing between the computers and control of the hyperterminal 24 by the computer 34 are conducted through the communications network 46.

Moreover, although embodiments were described above where the advice memo is issued only when shot images for which photographic processing (the creation of photographic prints) has been requested are images that the customer has shot using a DSC (images for which photographic processing has been requested by the first or the second request mode), the invention is not limited thereto. For example, even if the images are images that have been exposed and recorded on a photographic film by a camera (image for which photographic processing has been requested by the third request mode), if the photographic film is APS film, shooting information is recorded on a magnetic layer of the APS film. Thus, by using the shooting information recorded on the APS film, it is possible to identify the shooting operations and model, similar to shot images shot using a DSC, with regard to shot images shot using an APS film-use camera. On the basis of the identified model, appropriate advice can be provided, it can be determined whether or not the identified shooting operation is appropriate, and an advice memo can be issued.

Of silver film cameras, there are sophisticated single lens reflex cameras disposed with a function for recording shooting information in an internal memory. This type of camera adopts a configuration in which the shooting information recorded in the internal memory and shot images (photographic film) are corresponded by an ID that is optically written outside a shot image region of the photographic film. With regard to shot images shot using this type of camera, by using the shooting information recorded in the internal memory, the shooting operations and model can be identified similar to shot images shot using a DSC, and, on the basis of the identified model, appropriate advice can be provided, it can be determined whether or not the identified shooting operation is appropriate, and an advice memo can be issued.

Moreover, mobile telephones disposed with shooting functions are recently becoming widespread. At the present point in time, there are no mobile telephones of a type that also adds shooting information to shot images. However, with respect to shot images shot with this type of mobile telephone, it could be possible to identify the model of the mobile telephone that had been used for the shooting, and it could be possible to provide appropriate advice on the basis of the identified model. Because it would also be possible to identify specification information obtained on the basis of the result of identifying the model and shooting operations on the basis of results in which the shot images are analyzed, it would be possible to determine whether or not the identified shooting operation is appropriate and issue an advice memo. The invention is thus one in which modes that do not use shooting information are also included in its scope of rights.

Although the examples were described above where the image outputted by the image forming system, or the image outputted medium created by the image forming system, is the photographic print which is obtained by exposure-recording the image on the photographic paper or printing paper, the invention is not limited to this. For example, the image outputted by the image forming system can be image (printed image) that is recorded on the recording material by applying ink, which is discharged from the recording head, on the recording material. In this case, photographic printer/processor 40 of image forming system 10 is replaced by an ink jet printer which records images with the above described recording method (ink jet recording method). Moreover, the image outputted by the image forming system can be image data which has been image-processed and written in information recording medium such as CD-R. In this case, the image outputted medium is the recording medium.

As described above, the invention has excellent effects in that, on the basis of the data of the shot images shot by the customer, the shooting operation of the customer is identified, it is determined whether or not the identified shooting operation of the customer is appropriate, and, on the basis of the result of the determination, advice information representing advice relating to a shooting operation is generated, whereby improvement of services with respect to customers conducting shooting operations can be realized.

The invention also has excellent effects in that, when a shooting device is operated, shooting is conducted, image outputted media are created from images obtained by the shooting, and information representing the reason for dissatisfaction is inputted by a customer who is dissatisfied with the image quality of the received image outputted media, a remedy for eliminating the dissatisfaction of the customer represented by the information is determined and advice information recommending to the customer implementation of the determined remedy is generated, whereby improvement of services with respect to customers who have requested the creation of image outputted media can be realized.

## Claims

1. An advice device comprising:
an identification section for identifying, on the basis of data of a shot image shot by a customer, a shooting operation of the customer during shooting;
a determination section for determining whether or not the shooting operation of the customer identified by the identification section is appropriate; and
a generation section for generating, on the basis of a result of determination by the determination section, advice information representing advice relating to a shooting operation.

2. The advice device of claim 1, wherein
shooting information representing shooting conditions during shooting and image data of the shot image are included in the data of the shot image, and
at least one of the identification of the shooting operation by the identification section, the determination by the determination section, and the generation of the advice information by the generation section is conducted on the basis of the shooting information and the image data of the shot image.

3. The advice device of claim 2, wherein the data of the shot image is provided by the customer as an EXIF-format image file.

4. The advice device of claim 2, wherein
the identification section identifies, on the basis of the shooting information, a shooting mode used during shooting as the shooting operation of the customer,
the determination section determines whether or not a subject type of the shot image that is determined by analyzing the image data of the shot image is a subject type suited for being shot in the shooting mode identified by the identification section, and
the generation section generates, as the advice information, advice information indicating the shooting mode suited for shooting the subject type when it is determined by the determination section that the subject type of the shot image is not the subject type suited for being shot in the identified shooting mode.

5. The advice device of claim 1, further including a storage section in which is stored specification information representing specifications of shooting devices, wherein the determination section determines whether or not the shooting operation of the customer is appropriate by identifying, on the basis of the data of the shot image, the model of the shooting device used by the customer for shooting and referencing, on the basis of the identified model, the corresponding specification information stored in the storage section.

6. The advice device of claim 1, wherein
the shot image is an image for which an image outputting has been requested by the customer with respect to an image forming system,
the advice device further includes an output section for analyzing the shot image on the basis of the data of the shot image, conducting image processing corresponding to a result of the analysis, and outputting the image, and
the generation section adds, to the generated advice information, notification information notifying the customer of the image processing conducted by the output section.

7. The advice device of claim 1, wherein
the shot image is an image for which an image outputting has been requested by the customer with respect to an image forming system, and
the generation section determines, on the basis of the data of the shot image, a type of image processing that is preferable to order at the time the image outputting is requested, and adds the determined type of the image processing to the advice information.

8. The advice device of claim lor claim 7, wherein
the shot image is an image for which an image outputting has been requested with respect to an image forming system, and
the advice device further includes a display control section which, when there is an inquiry from the customer, via a terminal separate from the image forming system, relating to the advice that the advice information represents, generates a simulated image representing an image to be obtained by conducting a shooting operation corresponding to the advice or by ordering the image processing corresponding to the advice at the time the image outputting is requested again and displays the simulated image on a display of the terminal.

9. The advice device of claim 1, wherein
the shot image is an image for which an image outputting has been requested by the customer with respect to an image forming system, and
the advice information generated by the generation section is conveyed to the customer when an outputted image in accordance with the customer's request is delivered to the customer.

10. The advice device of claim 9, wherein the generation section prints the generated advice information as a finishing memo and the finishing memo is added to the outputted image.

11. A storage medium in which is stored a program for implementing processing in a computer, the processing comprising:
a first step for identifying, on the basis of data of a shot image shot by a customer, a shooting operation of the customer during shooting;
a second step for determining whether or not the customer's shooting operation identified in the first step is appropriate; and
a third step for generating, on the basis of a result of the determination in the second step, advice information representing advice relating to a shooting operation.

12. The storage medium in which is stored a program of claim 11, wherein in the third step, a type of image processing that is preferable to order at the time an image outputting is requested is determined on the basis of data of the shot image, and the determined type of the image processing is added to the advice information.

13. An advice device comprising:
an input section for a customer, who received an image outputted medium created from an image obtained by shooting with a shooting device, to input, when the customer is dissatisfied with the image quality of the image outputted medium, information representing the reason for the dissatisfaction; and
a generation section for determining, when the information has been inputted by the customer via the input section, a remedy for eliminating the customer's dissatisfaction that the information represents and generating advice information recommending implementation of the determined remedy to the customer.

14. The advice device of claim 13, further including a storage section in which reasons for dissatisfaction that have the potential of being inputted as the information by the customer are corresponded with remedies for eliminating the dissatisfaction and stored,
wherein the generation section determines the remedy on the basis of the information stored in the storage section.

15. The advice device of claim 13, wherein the generation section determines a shooting operation for eliminating the customer's dissatisfaction that the information inputted via the input section represents, and generates advice information recommending implementation of the determined shooting operation to the customer.

16. The advice device of claim 15, wherein the generation section identifies, on the basis of data of the shot image obtained by the shooting, functions of the shooting device that the customer used during the shooting and determines a shooting operation for eliminating the dissatisfaction of the customer in accordance with functions of the identified shooting device.

17. The advice device of claim 13, wherein the generation section determines whether or not the customer's dissatisfaction that the information inputted via the input section represents can be eliminated by ordering predetermined image processing at the time creation of the image outputted medium is requested and, when it is determined that the customer's dissatisfaction can be eliminated by ordering the predetermined image processing, generates advice information recommending ordering the predetermined image processing.

18. The advice device of claim 17, wherein, when it is determined that the customer's dissatisfaction can be eliminated by ordering the predetermined image processing, the generation section generates image data representing an image to be outputted on the image outputted medium obtained by ordering the predetermined image processing and displays the image that the image data represents on a display.

19. The advice device of any one of claims 13-18, wherein the advice device is disposed at an order receiving center.

20. A recording medium in which is stored a program for implementing predetermined processing in a computer disposed with an input section for inputting information, the predetermined processing comprising:
a first step for determining, when a customer who received an image outputted medium created from an image obtained by shooting with a shooting device, is dissatisfied with the image quality of the image outputted medium, and inputted information representing the reason for the dissatisfaction via the input section, a remedy for eliminating the customer's dissatisfaction that the information represents; and
a second step for generating advice information recommending, to the customer, implementation of the remedy determined in the first step.

21. The advice device of claim 1 comprising:
an input section for inputting information about the image; and
an analyzing section for analyzing the information inputted via the input section; wherein
said generation section is adapted for generating the advice information, on the basis of at least one of a result of analysis by the analyzing section and a result of the determination by the determination section.

22. The advice device of claim 21, wherein the information inputted via the input section is information about at least one of image outputting, image processing, the shooting operation, and a shooting condition.

23. The advice device of claim 21, wherein the information inputted via the input section is at least one of a request, a problem, dissatisfaction, a query, and an answer.

24. The advice device of claim 21, wherein the information inputted via the input section is dissatisfaction with image outputting.

25. The advice device of claim 21, wherein the advice information is about at least one of image processing which is applicable to the image and a possible improvement of the shooting operation.

## Patentansprüche

1. Ratgebevorrichtung, umfassend:
ein Ermittlungsteil, mit dem auf der Grundlage von Daten eines von einem Benutzer aufgenommenen Bilds ein während der Aufnahme von dem Benutzer durchgeführter Aufnahmevorgang ermittelt wird;
einen Entscheidungsteil zum Entscheiden, ob der von dem Ermittlungsteil ermittelten Aufnahmevorgang des Benutzers angemessen ist; und
einen Generierteil, um auf der Grundlage eines Ergebnisses einer von dem Entscheidungsteil kommenden Entscheidung Ratgebeinformation zu generieren, die einen Ratschlag in Bezug auf einen Aufnahmevorgang repräsentiert.

2. Vorrichtung nach Anspruch 1, bei der
Aufnahmeinformation über Aufnahmebedingungen während der Aufnahme und Bilddaten des aufgenommenen Bilds in den Daten des aufgenommenen Bilds enthalten sind, und
die Ermittlung des Aufnahmevorgangs durch den Ermittlungsteil, die Entscheidung durch den Entscheidungsteil und/oder die Generierung der Ratgebeinformation durch den Generierteil auf der Grundlage der Aufnahmeinformation und der Bilddaten des aufgenommenen Bilds durchgeführt wird/werden.

3. Vorrichtung nach Anspruch 2, bei der die Daten des aufgenommenen Bilds von dem Benutzer als EXIF-Format-Bilddatei bereitgestellt werden.

4. Vorrichtung nach Anspruch 2, bei dem
der Ermittlungsteil auf der Grundlage der Aufnahmeinformation einen Aufnahmemodus ermittelt, der während der Aufnahme als der Aufnahmevorgang durch den Benutzer verwendet wurde,
der Entscheidungsteil entscheidet, ob ein Gegenstandstyp des aufgenommenen Bilds, analysiert durch die Bilddaten des aufgenommenen Bilds, ein Gegenstandstyp ist oder nicht, der sich für die Aufnahme in dem von dem Ermittlungsteil ermittelten Aufnahmemodus eignet, und
der Generierteil als Ratgebeinformation eine Ratgebeinformation generiert, die den Aufnahmemodus angibt, der sich für die Aufnahme des Gegenstandstyps eignet, wenn von dem Entscheidungsteil entschieden wird, dass der Gegenstandstyp des aufgenommenen Bilds nicht der Gegenstandstyp ist, der sich für die Aufnahme in dem ermittelten Aufnahmemodus eignet.

5. Vorrichtung nach Anspruch 1, weiterhin enthaltend einen Speicherteil, in dem Spezifikationsinformation über Spezifikationen von Aufnahmevorrichtungen gespeichert sind, wobei der Entscheidungsteil entscheidet, ob der Aufnahmevorgang des Benutzers passend ist, indem auf der Grundlage der Daten des aufgenommenen Bilds, des Modells der Aufnahmevorrichtung, die von dem Benutzer zur Aufnahme verwendet wurde, und unter Bezugnahme auf der Grundlage des ermittelten Modells, die entsprechende Spezifikationsinformation ermittelt wird, die in dem Speicherteil abgespeichert ist.

6. Vorrichtung nach Anspruch 1, bei der das aufgenommene Bild ein Bild ist, für welches von dem Benutzer in Bezug auf ein Bilderzeugungssystem eine Bildausgabe angefordert wurde,
die Ratgebevorrichtung außerdem einen Ausgabeteil zum Analysieren des aufgenommenen Bilds auf der Grundlage der Daten des aufgenommenen Bilds, zum Durchführen einer Bildverarbeitung entsprechend einem Ergebnis der Analyse und zum Ausgeben des Bilds enthält, und
der Generierteil zu der generierten Ratgebeinformation eine Hinweisinformation hinzufügt, die den Benutzer übe die von dem Ausgabeteil durchgeführte Bildverabeitung in Kenntnis setzt.

7. Vorrichtung nach Anspruch 1, bei der das aufgenommene Bild ein Bild ist, für welches von dem Benutzer in Bezug auf ein Bilderzeugungssystem eine Bildausgabe angefordert hat, und
der Generierteil auf der Grundlage der Daten des aufgenommenen Bilds, einen Typ der Bildverarbeitung festlegt, der für die Ausführung zur Zeit der Anforderung der Bildausgabe bevorzugt ist, und den vorbestimmten Typ der Bildverarbeitung zu der Ratgebeinformation hinzufügt.

8. Vorrichtung nach Anspruch 1 oder 7, bei der
das aufgenommene Bild ein Bild ist, für das in Bezug auf ein Bilderzeugungssystem eine Bildausgabe angefordert wurde, und
die Ratgebevorrichtung außerdem einen Anzeigesteuerteil enthält, der, wenn eine Anfrage seitens des Benutzers vorliegt, über ein von dem Bilderzeugungssystem getrenntes Terminal in Bezug auf den Ratschlag entsprechend der Ratgebeinformation ein simuliertes Bild generiert, welches ein Bild darstellt, welches gewonnen wird durch Ausführen eines Aufnahmevorgangs entsprechend dem Ratschlag, oder durch Anweisen der Bildverarbeitung entsprechend dem Ratschlag zu der Zeit, zu der die Bildausgabe erneut angefordert wird, um das simulierte Bild auf der Anzeige des Terminals darzustellen.

9. Vorrichtung nach Anspruch 1, bei der das aufgenommene Bild ein Bild ist, für welches von dem Benutzer in Bezug auf ein Bilderzeugungssystem eine Bildausgabe angefordert wurde, und
die Ratgebeinformation, die von dem Generierteil generiert wurde, zu dem Anwender geleitet wird, wenn ein ausgegebenes Bild entsprechend der Anforderung des Benutzers an den Benutzer geliefert wird.

10. Vorrichtung nach Anspruch 9, bei der der Generierteil die generierte Ratgebeinformation als Abschluß-Memo druckt und das Abschluß-Memo zu dem ausgegebenen Bild hinzugefügt wird.

11. Speichermedium, in welchem ein Programm zum lmplementieren der Verarbeitung in einem Computer gespeichert ist, wobei die Verarbeitung umfasst:
einen ersten Schritt, der auf der Grundlage von Daten eines von einem Benutzer aufgenommenen Bilds einen Aufnahmevorgang durch den Benutzer während der Bildaufnahme ermittelt;
einen zweiten Schritt zum Entscheiden, ob der Benutzer-Aufnahmevorgang, der in dem ersten Schritt ermittelt wurde, passend ist oder nicht; und
einen dritten Schritt zum Generieren von Ratgebeinformation mit einem Ratschlag bezüglich eines Aufnahmevorgangs, basierend auf einem Ergebnis der Entscheidung in dem zweiten Schritt.

12. Speichermedium nach Anspruch 11, bei dem in dem dritten Schritt ein Typ der Bildverarbeitung, die zu dem Zeitpunkt bevorzugt durchzuführen ist, zu dem eine Bildausgabe angefordert wird, auf der Grundlage von Daten des aufgenommenen Bilds festgestellt wird, und der festgestellte Typ der Bildverarbeitung zu der Ratgebeinformation hinzugefügt wird.

13. Ratgebevorrichtung, umfassend:
einen Eingabeteil für einen Benutzer, der ein von einem Medium ausgegebenes Bild empfangen hat, erzeugt von einem durch eine Aufnahme mit einer Aufnahmevorrichtung erhaltenen Bild, um dann, wenn der Benutzer mit der Bildqualität des von dem Medium ausgegebenen Bilds nicht einverstanden ist, Information über den Grund der Unzufriedenheit einzugeben, und
einen Generierteil zum Entscheiden, wann die Information von dem Benutzer über den Eingabeteil eingegeben wurde, zum Entscheiden über eine Abhilfe zum Beseitigen der Unzufriedenheit des Benutzers, welche die Information repräsentiert, und zum Generieren von Ratgebeinformation, die eine Implementierung der entschiedenen Abhilfe für den Benutzer empfiehlt.

14. Vorrichtung nach Anspruch 13, weiterhin umfassend einen Speicherteil, in welchem Gründe für die Unzufriedenheit, die möglicherweise als die Information durch den Benutzer eingegeben werden, in Entsprechung gebracht sind mit Abhilfemaßnahmen zum Beseitigen der Unzufriedenheit, und abgespeichert sind,
wobei der Generierteil die Abhilfemaßnahme auf der Grundlage der in dem Speicherteil gespeicherten Information bestimmt.

15. Vorrichtung nach Anspruch 13, bei der der Generierteil einen Aufnahmevorgang zum Beseitigen der Unzufriedenheit des Benutzers, welche die über den Eingabeteil eingegebene Information repräsentiert, feststellt, und Ratgebeinformation generiert, die eine Implementierung des bestimmten Aufnahmevorgangs für den Benutzer empfiehlt.

16. Vorrichtung nach Anspruch 15, bei der der Generierteil auf der Grundlage von Daten des durch die Aufnahme gewonnenen Aufnahmebilds Funktionen der Aufnahmevorrichtung ermittelt, die der Benutzer bei der Aufnahme verwendet hat, und einen Aufnahmevorgang entscheidet, um die Unzufriedenheit des Benutzers zu beseitigen, abhängig von den Funktionen der ermittelten Aufnahmevorrichtung.

17. Vorrichtung nach Anspruch 13, bei dem der Generierteil entscheidet, ob die Unzufriedenheit des Benutzers, welche die über den Eingabeteil eingegebene Information repräsentiert, beseitigt werden kann durch Anweisen einer vorbestimmten Bildverarbeitung zu der Zeit, zu der die Erzeugung des durch das Medium ausgegebenen Bilds angefordert wird, und, wenn festgestellt wird, dass sich die Unzufriedenheit des Benutzers beseitigen lässt durch Anweisen der vorbestimmten Bildverarbeitung, Ratgebeinformationen generiert, die die Anweisung der vorbestimmten Bildverarbeitung empfiehlt.

18. Vorrichtung nach Anspruch 17, bei der, wenn festgestellt wird, dass die Unzufriedenheit des Benutzers beseitigt werden kann durch Anweisen der vorbestimmten Bildverarbeitung, der Generierteil Bilddaten generiert, die repräsentativ sind für ein Bild, welches auf das Bildausgabemedium auszugeben ist, erhalten durch Anweisen der vorbestimmten Bildverarbeitung, und das Bild, welches durch die Bilddaten repräsentiert wird, auf einer Anzeigevorrichtung angezeigt wird.

19. Vorrichtung nach einem der Ansprüche 13 bis 18, bei der die Ratgebevorrichtung sich in einem Auftrags-Annahmezentrum befindet.

20. Aufzeichnungsmedium, in welchem ein Programm zum Implementieren vorbestimmter Verarbeitung in einem Computer gespeichert ist, der mit einem Eingabeteil zum Eingeben von Information ausgestattet ist, wobei die vorbestimmte Verarbeitung umfasst:
einen ersten Schritt, bei dem dann, wenn ein Kunde, der ein von einem Medium ausgegebenes Bild empfangen hat, das auf einem von einer Aufnahmevorrichtung aufgenommenen Bild erhalten wurde, mit der Bildqualität des von dem Medium ausgegebenen Bilds unzufrieden ist, und Information über den Grund der Unzufriedenheit über den Eingabeteil eingegeben wurde, eine Abhilfemaßnahme zum Beseitigen der Unzufriedenheit des Benutzers, die die Information repräsentiert, entschieden wird; und
einen zweiten Schritt zum Generieren von Ratgebeinformation, die für den Kunden eine Implementierung der in dem ersten Schritt entschiedenen Abhilfemaßnahme empfiehlt.

21. Ratgebevorrichtung nach Anspruch 1, umfassend:
einen Eingabeteil zum Eingeben von Information über das Bild; und
einen Analysierteil zum Analysieren der über den Eingabeteil eingegebenen Information; wobei
der Generierteil dazu ausgebildet ist, die Ratgebeinformation zu generieren auf der Grundlage des Ergebnisses der durch den Analysierteil vorgenommenen Analyse und/oder eines Ergebnisses der Entscheidung durch den Entscheidungsteil.

22. Ratgebevorrichtung nach Anspruch 21, bei der die über den Eingabeteil eingegebene Information Information bezüglich Bildausgabe, Bildverarbeitung, Aufnahmevorgang und/oder Aufnahmebedingung ist.

23. Ratgebevorrichtung nach Anspruch 21, bei der die über den Eingabeteil eingegebene Information eine Anforderung, ein Problem, eine Unzufriedenheit, eine Anfrage und/oder eine Antwort darstellt.

24. Ratgebevorrichtung nach Anspruch 21, bei der die über den Eingabeteil eingegebene Information Unzufriedenheit mit der Bildausgabe zum Ausdruck bringt.

25. Ratgebevorrichtung nach Anspruch 21, bei der die Ratgebeinformation die Bildverarbeitung, die bei dem Bild anwendbar ist, und/oder eine mögliche Verbesserung des Aufnahmevorgangs betrifft.

## Revendications

1. Un dispositif de conseil comprenant :
une section d'identification pour identifier, sur la base de données d'une image prise par un client, une opération de prise de vue du client pendant la prise de vue;
une section de détermination pour déterminer si l'opération de prise de vue du client identifiée par la section d'identification est appropriée ou non; et
une section de génération pour générer, sur la base d'un résultat de détermination par la section de détermination, une information de conseil représentant un conseil relatif à une opération de prise de vue.

2. Le dispositif de conseil de la revendication 1, dans lequel
une information de prise de vue représentant des conditions de prise de vue pendant la prise de vue et des données d'image de l'image prise sont incluses dans les données de l'image prise, et
au moins une opération parmi l'identification de l'opération de prise de vue par la section d'identification, la détermination par la section de détermination et la génération de l'information de conseil par la section de génération, est effectuée sur la base de l'information de prise de vue et des données d'image de l'image prise.

3. Le dispositif de conseil de la revendication 2, dans lequel les données de l'image prise sont fournies par le client sous la forme d'un fichier d'image au format EXIF.

4. Le dispositif de conseil de la revendication 2, dans lequel
la section d'identification identifie, sur la base de l'information de prise de vue, un mode de prise de vue utilisé pendant la prise de vue, comme l'opération de prise de vue du client,
la section de détermination détermine si un type de sujet de l'image prise qui est déterminé en analysant les données d'image de l'image prise, est ou non un type de sujet qui convient pour être photographié dans le mode de prise de vue identifié par la section d'identification, et
la section de génération génère, en tant qu'information de conseil, une information de conseil indiquant le mode de prise de vue qui convient pour photographier le type de sujet, lorsque la section de détermination détermine que le type de sujet de l'image prise n'est pas le type de sujet qui convient pour être photographié dans le mode de prise de vue identifié.

5. Le dispositif de conseil de la revendication 1, incluant en outre une section de stockage dans laquelle est stockée une information de spécifications représentant des spécifications de dispositifs de prise de vue, dans lequel la section de détermination détermine si l'opération de prise de vue du client est appropriée ou non, en identifiant, sur la base des données de l'image prise, le modèle du dispositif de prise de vue utilisé par le client pour la prise de vue, et en se référant, sur la base du modèle identifié, à l'information de spécifications correspondante stockée dans la section de stockage.

6. Le dispositif de conseil de la revendication 1, dans lequel
l'image prise est une image pour laquelle le client a demandé à un système de formation d'image de fournir une image en sortie,
le dispositif de conseil inclut en outre une section de sortie pour analyser l'image prise sur la base des données de l'image prise, effectuer un traitement d'image correspondant à un résultat de l'analyse, et fournir l'image en sortie, et
la section de génération ajoute, à l'information de conseil générée, une information de notification notifiant au client le traitement d'image effectué par la section de sortie.

7. Le dispositif de conseil de la revendication 1, dans lequel
l'image prise est une image pour laquelle le client a demandé à un système de formation d'image de fournir une image en sortie, et
la section de génération détermine, sur la base des données de l'image prise, un type de traitement d'image qu'il est préférable de commander au moment où la présentation d'une image en sortie est demandée, et ajoute à l'information de conseil le type du traitement d'image qui est déterminé.

8. Le dispositif de conseil de la revendication 1 ou de la revendication 7, dans lequel
l'image prise est une image pour laquelle il a été demandé à un système de formation d'image de fournir une image en sortie, et
le dispositif de conseil inclut en outre une section de commande de visualisation qui, lorsqu'il y a une demande de la part du client, par l'intermédiaire d'un terminal séparé du système de formation d'image, concernant le conseil que l'information de conseil représente, génère une image simulée représentant une image qui sera obtenue en effectuant une opération de prise de vue correspondant au conseil, ou en commandant le traitement d'image correspondant au conseil, au moment auquel la présentation d'une image en sortie est demandée à nouveau, et visualise l'image simulée sur un dispositif de visualisation du terminal.

9. Le dispositif de conseil de la revendication 1, dans lequel
l'image prise est une image pour laquelle le client a demandé à un système de formation d'image de présenter une image en sortie, et
l'information de conseil générée par la section de génération est transmise au client lorsqu'une image présentée en sortie conformément à la demande du client est fournie au client.

10. Le dispositif de conseil de la revendication 9, dans lequel la section de génération imprime l'information de conseil générée sous la forme d'une note de finition, et la note de finition est ajoutée à l'image présentée en sortie.

11. Un support de stockage dans lequel est stocké un programme pour réaliser un traitement dans un ordinateur, le traitement comprenant :
une première étape pour identifier, sur la base de données d'une image prise par un client, une opération de prise de vue du client pendant la prise de vue;
une deuxième étape pour déterminer si l'opération de prise de vue du client identifiée dans la première étape est appropriée ou non; et
une troisième étape pour générer, sur la base d'un résultat de détermination dans la deuxième étape, une information de conseil représentant un conseil relatif à une opération de prise de vue.

12. Le support de stockage dans lequel est stocké un programme de la revendication 11, dans lequel dans la troisième étape, un type de traitement d'image qu'il est préférable de commander au moment où la présentation d'une image en sortie est demandée, est déterminé sur la base de données de l'image prise, et le type du traitement d'image déterminé est ajouté à l'information de conseil.

13. Un dispositif de conseil comprenant :
une section d'entrée pour un client, qui a reçu un support de sortie d'image créé à partir d'une image obtenue en effectuant une prise de vue avec un dispositif de prise de vue, pour introduire, lorsque le client n'est pas satisfait de la qualité d'image du support de sortie d'image, une information représentant la raison de l'insatisfaction; et
une section de génération pour déterminer, lorsque l'information a été introduite par le client par l'intermédiaire de la section d'entrée, un correctif pour éliminer l'insatisfaction du client que l'information représente, et pour générer une information de conseil recommandant au client la mise en oeuvre du correctif déterminé.

14. Le dispositif de conseil de la revendication 13, incluant en outre une section de stockage dans laquelle des raisons d'insatisfaction qui ont le potentiel d'être introduites sous la forme de l'information par le client sont mises en correspondance avec des correctifs pour éliminer l'insatisfaction et stockées,
dans lequel la section de génération détermine le correctif sur la base de l'information stockée dans la section de stockage.

15. Le dispositif de conseil de la revendication 13, dans lequel la section de génération détermine une opération de prise de vue pour éliminer l'insatisfaction du client que représente l'information introduite par l'intermédiaire de la section d'entrée, et génère une information de conseil recommandant au client la mise en oeuvre de l'opération de prise de vue déterminée.

16. Le dispositif de conseil de la revendication 15, dans lequel la section de génération identifie, sur la base de données de l'image prise obtenue par la prise de vue, des fonctions sur le dispositif de prise de vue que le client a utilisées pendant la prise de vue, et détermine une opération de prise de vue pour éliminer l'insatisfaction du client conformément à des fonctions du dispositif de prise de vue identifié.

17. Le dispositif de conseil de la revendication 13, dans lequel la section de génération détermine si l'insatisfaction du client que représente l'information introduite par l'intermédiaire de la section d'entrée peut être éliminée ou non en commandant un traitement d'image prédéterminé au moment auquel la création du support de sortie d'image est demandée, et lorsqu'il est déterminé que l'insatisfaction du client peut être éliminée en commandant le traitement d'image prédéterminé, génère une information de conseil recommandant de commander le traitement d'image prédéterminé.

18. Le dispositif de conseil de la revendication 17 dans lequel, lorsqu'il est déterminé que l'insatisfaction du client peut être éliminée en commandant le traitement d'image prédéterminé, la section de génération génère des données d'image représentant une image à fournir en sortie sur le support de sortie d'image obtenu en commandant le traitement d'image prédéterminé, et visualise sur un dispositif de visualisation l'image que les données d'image représentent.

19. Le dispositif de conseil de l'une quelconque des revendications 13 à 18, dans lequel le dispositif de conseil est placé à un centre de réception de commandes.

20. Un support d'enregistrement dans lequel est stocké un programme pour accomplir un traitement prédéterminé dans un ordinateur comportant une section d'entrée pour introduire de l'information, le traitement prédéterminé comprenant :
une première étape pour déterminer, lorsqu'un client qui a reçu un support de sortie d'image créé à partir d'une image obtenue en effectuant une prise de vue avec un dispositif de prise de vue, n'est pas satisfait de la qualité d'image du support de sortie d'image, et l'information introduite par l'intermédiaire de la section d'entrée représentant la raison de l'insatisfaction, un correctif pour éliminer l'insatisfaction du client que l'information représente; et
une deuxième étape pour générer une information de conseil recommandant au client de mettre en oeuvre le correctif déterminé dans la première étape.

21. Le dispositif de conseil de la revendication 1, comprenant :
une section d'entrée pour introduire de l'information concernant l'image; et
une section d'analyse pour analyser l'information introduite par l'intermédiaire de la section d'entrée; dans lequel
ladite section de génération est adaptée pour générer l'information de conseil, sur la base d'au moins un d'un résultat d'analyse par la section d'analyse et d'un résultat de la détermination par la section de détermination.

22. Le dispositif de conseil de la revendication 21, dans lequel l'information introduite par l'intermédiaire de la section d'entrée est une information concernant au moins un des éléments suivants : la présentation d'image en sortie, le traitement d'image, l'opération de prise de vue et une condition de prise de vue.

23. Le dispositif de conseil de la revendication 21, dans lequel l'information introduite par l'intermédiaire de la section d'entrée est au moins un des éléments suivants : une demande, un problème, une insatisfaction, une interrogation et une réponse.

24. Le dispositif de conseil de la revendication 21, dans lequel l'information introduite par l'intermédiaire de la section d'entrée est une insatisfaction relative à la présentation d'image en sortie.

25. Le dispositif de conseil de la revendication 21, dans lequel l'information de conseil porte sur au moins un élément parmi un traitement d'image qui est applicable à l'image et une amélioration possible de l'opération de prise de vue.
